# EUROPEAN PATENT SPECIFICATION

(11) **EP 3 925 173 B1**
(45) Date of publication and mention of the grant of the patent: **10.08.2022**
(21) Application number: 19828352.5
(22) Date of filing: 18.12.2019
(51) Int. Cl.: H04L 45/42, H04W 40/22, H04W 88/08, H04W 40/24

(54) **A CENTRAL UNIT (CU), A DISTRIBUTED UNIT (DU) AND METHODS THEREIN FOR FORWARDING OF DATA IN AN INTEGRATED ACCESS BACKHAUL (IAB) NETWORK**
ZENTRALEINHEIT (CU), VERTEILTE EINHEIT (DU) UND VERFAHREN DARIN ZUR WEITERLEITUNG VON DATEN IN EINEM NETZWERK MIT INTEGRIERTEN ZUGANGS-BACKHAUL (IAB)
UNITÉ CENTRALE (CU), UNITÉ DISTRIBUÉE (DU) ET PROCÉDÉS ASSOCIÉS POUR L'ACHEMINEMENT DE DONNÉES DANS UN RÉSEAU DE RACCORDEMENT D'ACCÈS INTÉGRÉ (IAB)

(30) Priority: 14.02.2019 US 201962805324 P
(43) Date of publication of application: 22.12.2021
(73) Proprietor: Telefonaktiebolaget LM Ericsson (publ), 164 83 Stockholm (SE)
(72) Inventor: MUHAMMAD, Ajmal, 191 41 Sollentuna (SE); PRADAS, Jose Luis, 118 27 Stockholm (SE); MILDH, Gunnar, 192 55 Sollentuna (SE); TEYEB, Oumer, 171 44 Solna (SE)
(74) Representative: Ericsson
(86) International application number: PCT/SE2019/051302
(87) International publication number: WO 2020/167186

(56) References cited:
- ZTE: "Consideration on Routing in IAB Architecture 1a and 1b", 3GPP DRAFT; R2-1812469 CONSIDERATION ON ROUTING IN IAB ARCHITECTURE 1A AND 1B, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Gothenburg, Sweden; 20180820 - 20180824 10 August 2018 (2018-08-10), XP051522067, Retrieved from the Internet: URL:http://www.3gpp.org/ftp/tsg%5Fran/WG2% 5FRL2/TSGR2%5F103/Docs/R2%2D1812469%2Ezip [retrieved on 2018-08-10]
- HUAWEI: "Route selection method for architecture 1a", 3GPP DRAFT; R2-1817775 ROUTE SELECTION METHOD FOR ARCHITECTURE 1A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Spokane, USA; 20181112 - 20181116 12 November 2018 (2018-11-12), XP051557292, Retrieved from the Internet: URL:http://www.3gpp.org/ftp/Meetings%5F3GP P%5FSYNC/RAN2/Docs/R2%2D1817775%2Ezip [retrieved on 2018-11-12]
- "3rd Generation Partnership Project; Technical Specification Group Radio Access Network; Study on Integrated Access and Backhaul; (Release 15)", 3GPP DRAFT; DRAFT-7 TR 38874 V100 -CLN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 25 November 2018 (2018-11-25), XP051490022, Retrieved from the Internet: URL:http://ftp.3gpp.org//Specs/archive/38_ series/38.874/38874-100.zip [retrieved on 2018-11-25]

## Description

### TECHNICAL FIELD

Embodiments herein relate to a Central Unit (CU), a Distributed Unit (DU) and methods therein. In particular, they relate to forwarding of data in an Integrated Access Backhaul (IAB) network.

### BACKGROUND

In a typical wireless communication network, wireless devices, also known as wireless communication devices, mobile stations, stations (STA) and/or User Equipments (UE), communicate via a Local Area Network (LAN) such as a WiFi network or a Radio Access Network (RAN) to one or more Core Networks (CN). The RAN covers a geographical area which is divided into service areas or cell areas, which may also be referred to as a beam or a beam group, with each service area or cell area being served by a radio network node such as a radio access node e.g., a Wi-Fi access point or a Radio Base Station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

### Integrated Access Backhaul Networks

The mobile broadband standard 3GPP is studying potential solutions for efficient operation of integrated access and wireless access backhaul in NR IAB.

IAB strives to reuse existing functions and interfaces defined for access. In particular, Mobile-Termination (MT), gNB Distributed Unit (DU) (gNB-DU), gNB Central Unit (CU) (gNB-CU) as well as the corresponding interfaces NR Uu (between MT and gNB), F1, NG, X2 and N4 are used as baseline for the IAB architectures. Modifications or enhancements to these functions and interfaces for the support of IAB will be explained in the context of the architecture discussion. Additional functionality such as multi-hop forwarding is included in the architecture discussion as it is necessary for the understanding of IAB operation and since certain aspects may require standardization.

The Mobile-Termination (MT) function has been defined as a component of the Mobile Equipment, e.g. of the UE. In the context of this study, MT is referred to as a function residing on an IAB-node that terminates the radio interface layers of the backhaul Uu interface toward the IAB-donor or other IAB-nodes.

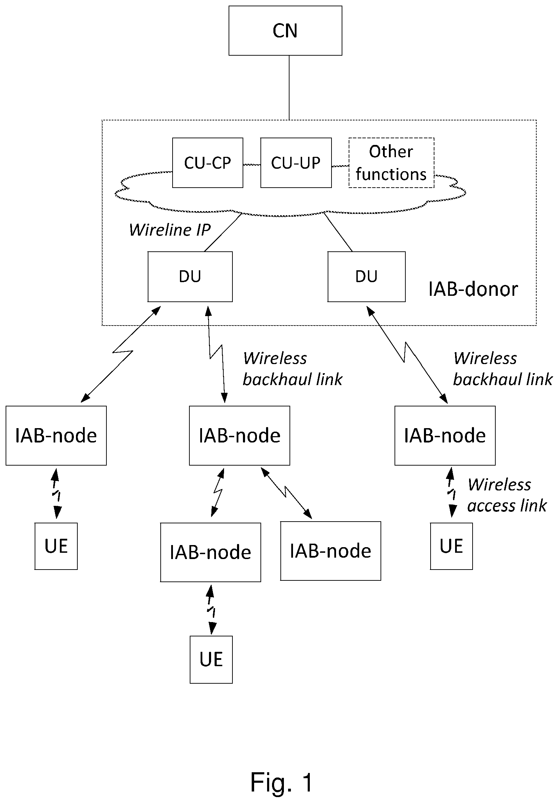

**Figure 1** shows a reference diagram for IAB in standalone mode, which contains one IAB-donor and multiple IAB-nodes. The IAB-donor is treated as a single logical node that comprises a set of functions such as gNB-DU, gNB-CU-CP, gNB-CU-UP and potentially other functions. In a deployment, the IAB-donor may be split according to these functions, which may all be either collocated or non-collocated as allowed by the 3GPP NG-RAN architecture. IAB-related aspects may arise when such split is exercised. Also, some of the functions presently associated with the IAB-donor may eventually be moved outside of the donor in case it becomes evident that they do not perform IAB-specific tasks.

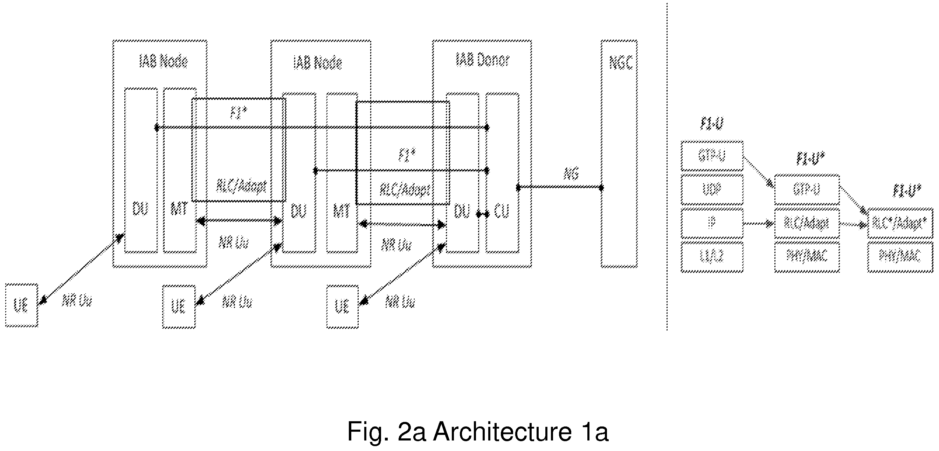

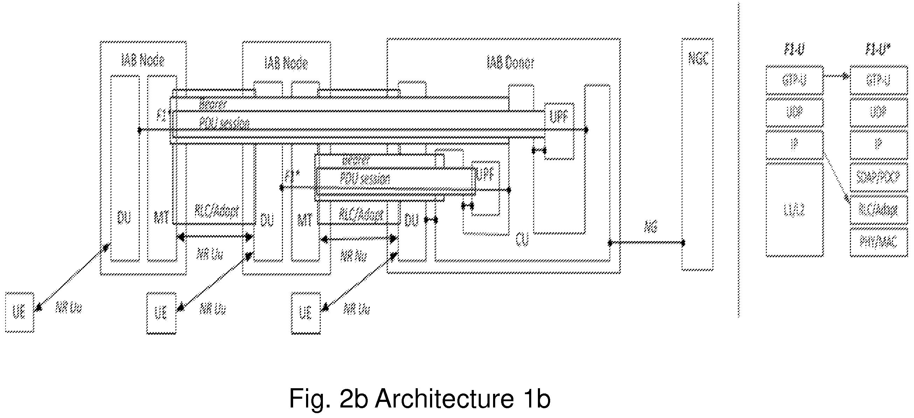

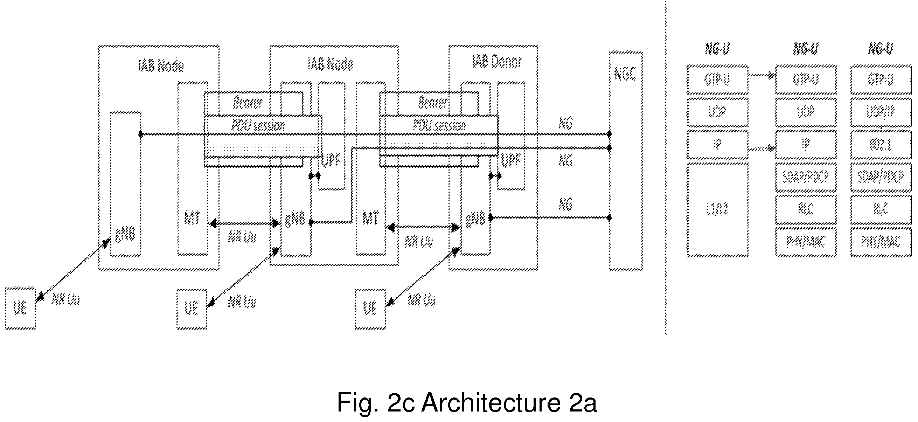

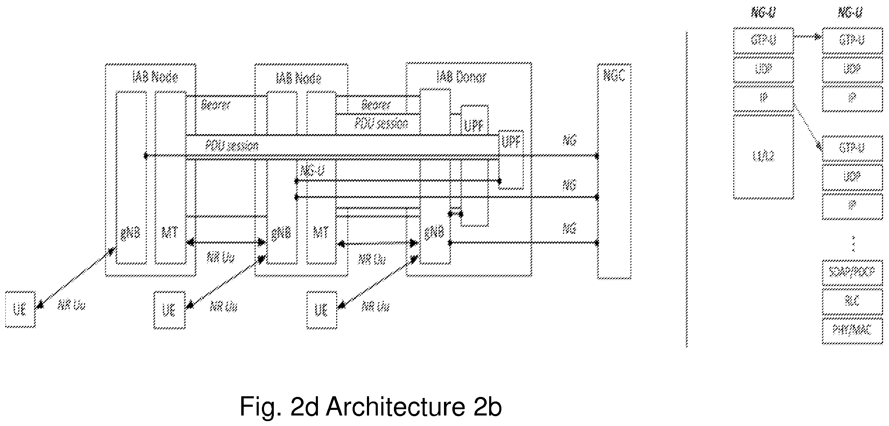

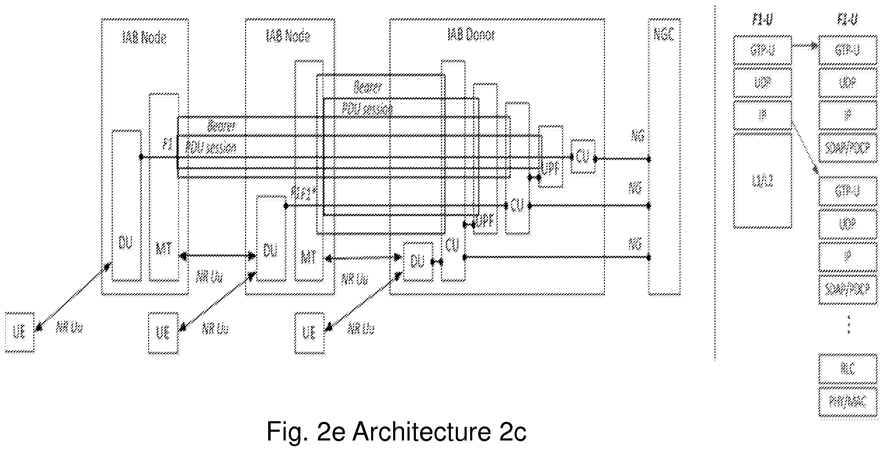

A number of potential architectures to implement IAB have been identified in this study, cf. 3GPP TR 38.874 for the details of these architectures): Architecture 1a, Architecture 1b, Architecture 2a, Architecture 2b, and Architecture 2c. **Figures 2a-2e** schematically illustrate the different IAB architecture options. Some abbreviations in these figures are:
NGC: Next Generation Core;
UDP: User Datagram Protocol;
GTP-U: General Packet Radio Service (GPRS) Tunneling Protocol User plane;
IP: Internet Protocol;
L1, L2: Layer 1, layer 2 in a protocol stack;
PHY: Physical Layer;
MAC: Medium Access Control protocol;
PDU: Protocol Data Unit;
SDAP: Service Data Adaptation Protocol;
PDCP: Packet Data Convergence Protocol.

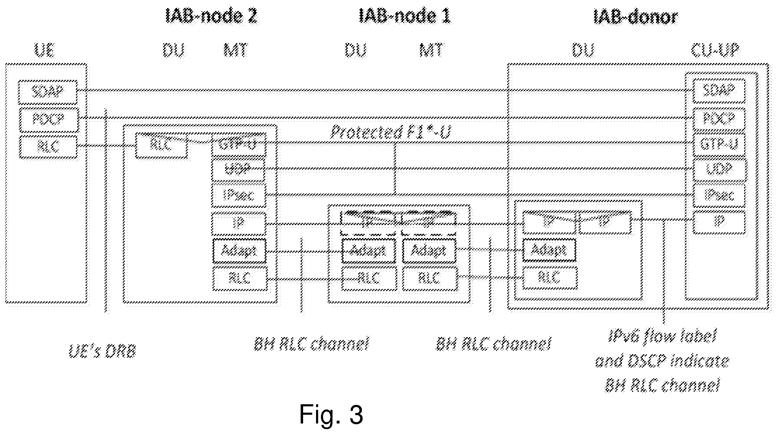

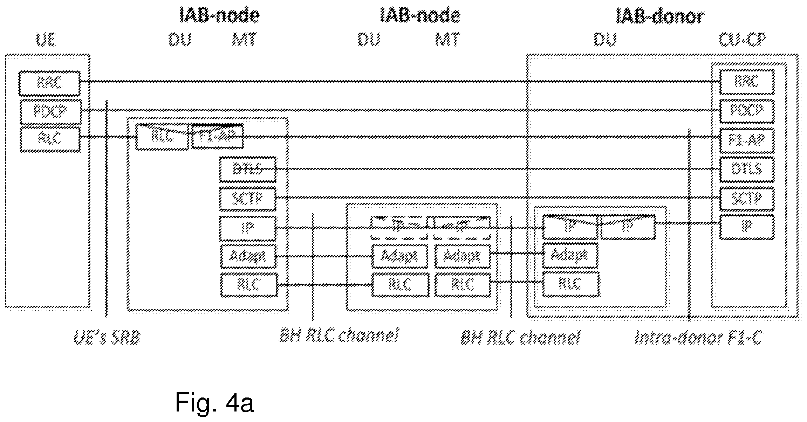

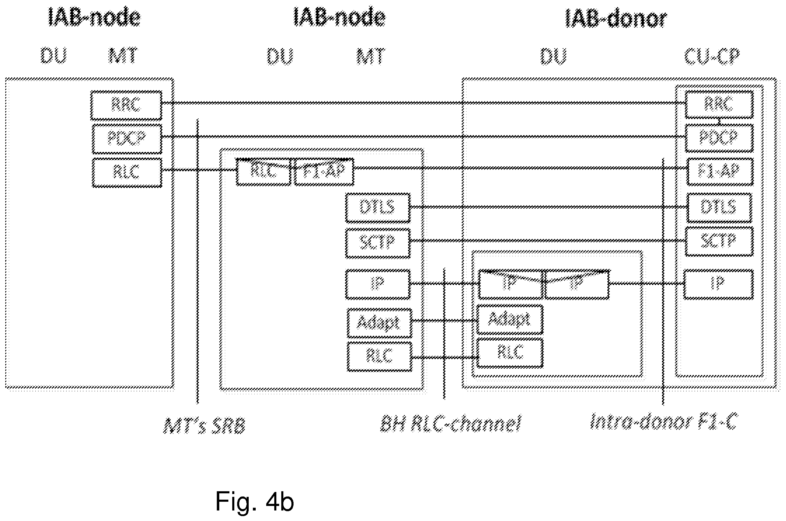

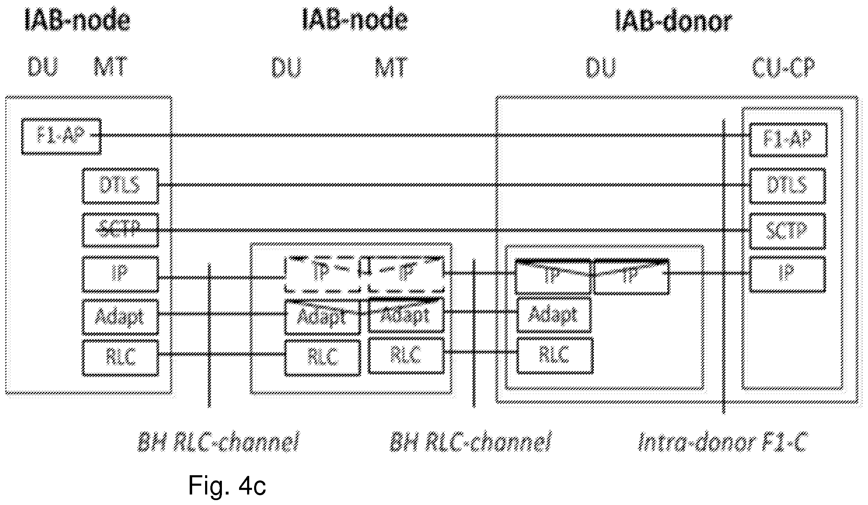

After analyzing the differences between these options during the study item phase of the IAB specifications, the 3GPP has concluded to standardize architecture 1a for the 3GPP TS 38.874 Release 16 v.16.0.0. **Figure 3** schematically illustrates the proposed User Plane (UP) protocol stacks for the architecture 1a, and **Figure 4** schematically illustrates the proposed Control Plane (CP) Protocol stack for the architecture 1a. **Figure 4a** schematically illustrates the UE's RRC, **Figure 4b** schematically illustrates the MT's RRC, and **Figure 4c** schematically illustrates the IAB DU's F1-AP. Some abbreviations used in Figures 4a-c are:
RRC: Radio Resource Control;
DTLS: Datagram Transport Layer Security;
SCTP: Stream Control Transmission Protocol.

As shown in Figures 3 and 4, the chosen protocol stacks reuse the current CU-DU split specification in 3GPP Release 15. v.15.4.1. where the full F1-U (GPRS Tunnelling Protocol User Plane (GTP-U)/UDP/IP) is terminated at the IAB node (like a normal DU) and the full F1-C (F1-AP/SCTP/IP) is also terminated at the IAB node (like a normal DU). In the above cases, a Network Domain Security (NDS) has been employed to protect both UP and CP traffic (IPsec in the case of UP, and DTLS in the case of CP). IPsec could also be used for the CP protection instead of DTLS.

One commonality between the CP and UP protocol stacks is that a new layer, called *adaptation layer (referred to as "Adapt" in* *figures 3*, 4a-4c), has been introduced in the intermediate IAB nodes and the IAB donor, which is used for routing of packets to the appropriate downstream/upstream node and also mapping the UE bearer data to the proper backhaul Radio Link Control (RLC) channel (and also between backhaul RLC channels in intermediate IAB nodes) to satisfy the end to end Quality of Service (QoS) requirements of bearers. More specifically, the information carried on the adaptation layer will support the following functions mentioned in the 3GPP standard TR 38.874:
- Identification of the UE-bearer for the Protocol Data Unit (PDU);
- Routing across the wireless backhaul topology;
- QoS-enforcement by the scheduler on DL and UL on the wireless backhaul link;
- Mapping of UE user-plane PDUs to backhaul RLC channels;
- Potentially other functions.

### Content carried on the adaptation layer header

The IAB Study Item (SI), 3GPP TR 38.874, identifies information to be carried on the adaptation layer header. This may comprise:
- UE-bearer-specific Id;
- UE-specific Id;
- Route Id, IAB-node or IAB-donor address;
- QoS information;
- Potentially other information.

The IAB-nodes may use the identifiers carried via the adaptation layer Adapt to ensure required QoS treatment and to decide which hop a packet should be sent to. A brief overview is provided below on how the above information may be used to this end, if comprised in the final design of Adapt.

The UE-bearer-specific Id may be used by the IAB-node and the IAB-donor to identify the PDU's UE-bearer. UE's access IAB-node would then map Adapt information, e.g. UE-specific ID, UE-bearer specific ID, into the corresponding Cell-Radio Network Temporary Identifier (C-RNTI) and Logical Channel Identity (LCID). The IAB-donor DU may also need to map Adapt information into the F1-U GTP-U TEID used between Donor DU and Donor CU.

UE-bearer-specific Identity (Id), UE-specific Id, Route Id, or IAB-node/IAB-donor address may be used in combination or individually, to route the PDU across the wireless backhaul topology.

UE-bearer-specific Id, UE-specific Id, UE's access node IAB ID, or QoS information may be used, in combination or individually, on each hop to identify the PDU's QoS treatment. The PDU's QoS treatment may also be based on the LCID.

### Route Management

In case of multiple hops, routing in the RAN part is an important issue that enables a packet to be forwarded via multiple intermediate IAB-nodes between the IAB-donor and a specific UE. This comprises establishment of routes, e.g. establishment of routes when the IAB-node connects to the network or when the topology changes. It further comprises the selection of a route in case multiple concurrent routes exist between the same end points, e.g. between the IAB-donor DU and an IAB-node. One possible solution is destination-address-based routing, which has the following characteristics:
- A routing table including routing information is configured on each node, such as the IAB-donor DU or the IAB-node. This routing table may be configured by the CU-CP (e.g. via F1-AP or RRC). The routing information may comprise:
   - destination address;
   - next-hop node, Backhaul (BH) link or BH RLC channel where a
   - packet is forwarded;
   - cost metric.
- The destination address is carried in the packet header. For downlink data transmissions, this destination address is added by the IAB-donor DU and the destination address could be the target IAB-node-ID or the UE-ID. For uplink data transmissions, the destination address may be the IAB-donor DU address.
- For each packet, an intermediate IAB-node selects the next hop node for data transmission according to the routing table and the destination address carried in the packet's adaptation info. In case the routing table holds multiple next-hop entries for the same destination address, it selects the next hop based on the cost metric.

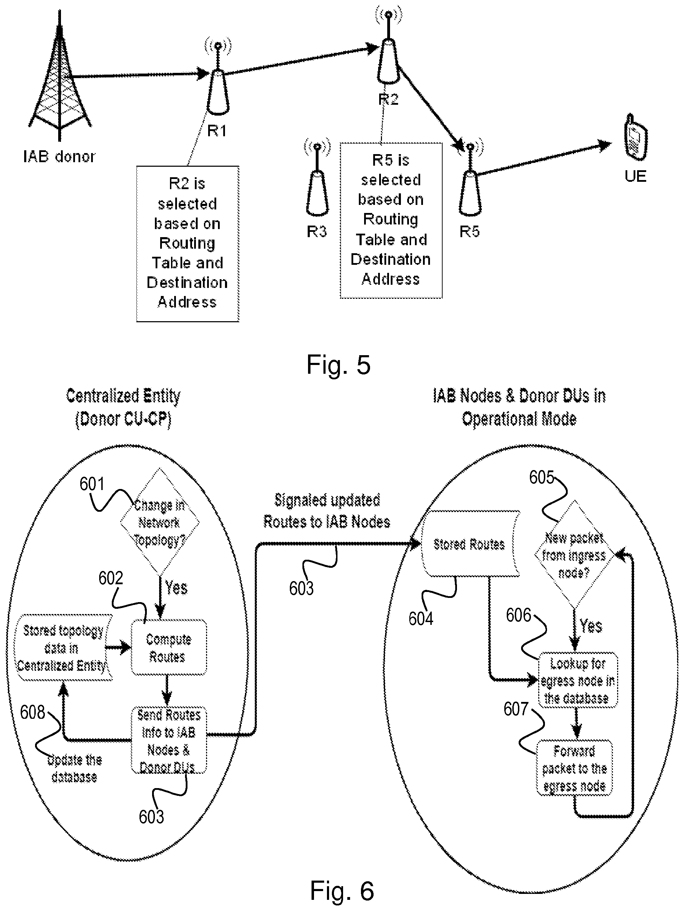

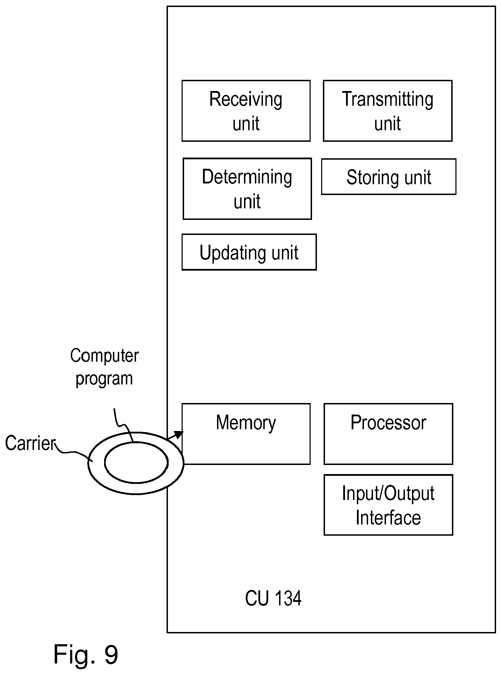

One example of route selection in a redundant topology is provided in **Figure 5**depicting Figure 9.7.11-1 in the 3GPP standard TR 38.874.

Since IAB backhaul-link-failure (BH RLF) and node congestion may occur frequently and swiftly in IAB networks, route selection under multi-connectivity (topological redundancy) may achieve a fast response to the RLF and the overloading of IAB-nodes. In essence, route selection may deal with short-term changes in the IAB networks, whereas topology adaptation may only deal with long-term changes. The cost metric may be defined based on the average (long-term) cost of sending a packet between the two IAB-nodes in the current topology. The next-hop node may be selected at every IAB-node with the least cost metrics to the destination node, under the current conditions of satisfied link quality and buffer load.

The cost metric may be calculated by the CU and signaled to the IAB-node, or it may be calculated or updated locally at every IAB-nodes. Since consecutive UE packets may take different or opportunistic UL and DL routes in reaching the destination, mechanisms for dealing with out-of-order packets may be supported.

"Consideration on Routing in IAB Architecture 1a and 1b", ZTE, 3GPP TSG-RAN WG2 #103 R2-1812460, Gothenburg, Sweden, 20-24th August 2018, discusses various implementation of routing in IAB networks, e.g. routing at each IAB node by either selecting an output bearer for each received packet based on a pre-configured routing table, or by selecting an output bearer for each received packed based on forwarding information attached in the packet.

"Route selection method for architecture 1a", Huawei, 3GPP TSG-RAN WG2 meeting #104, RS-1817775, Spokane, USA, 12th-16th November, 2018, discusses ways to perform route selection in multi-hop IAB network with multi-connectivity, e.g. based on path information based routing by sending the forwarding path carried by the adaptation info.

"Study on Integrated Access and Backhaul; (Release 15)"; Technical Specification Group Radio Access Network, 3GPP TR 38.874 V1.0.0, 25th November 2018, discloses IAB architecture options and destination-address based routing in the IAB.

### SUMMARY

The invention is defined by a method performed in the Central Unit (CU) according to claim 1, a method performed by a first network node according to claim 6, a CU according to claim 11 and a first network node according to claim 14.

The invention results in the following:
The routing of data packets becomes more flexible. This is since the IAB nodes of the IAB communication network now knows about the nodes that can forward the data packets to the right destination node.

Further, the routing of the data packet only requires a small size adaptation header. This is since most of the information required for routing the data packet will be configured at the IAB nodes of the communication networks.

Yet further, the routing of the data packet requires a less signaling overhead. This is since the routes modification and/or updates for the data packet may be convey via an adaptation header instead of modifying the routing tables of the IAB nodes of the communication networks.

### BRIEF DESCRIPTION OF THE DRAWINGS

Examples of embodiments herein are described in more detail with reference to attached drawings in which:
- Figure 1: is a schematic block diagram illustrating prior art.
- Figures 2: a - e are a schematic block diagrams illustrating prior art.
- Figure 3: is a schematic block diagram illustrating prior art.
- Figures 4: a - c are a schematic block diagrams illustrating prior art.
- Figure 5: is a schematic block diagram illustrating prior art.
- Figure 6: is a schematic block diagram illustrating prior art.
- Figure 7: is a schematic block diagram illustrating embodiments of a wireless communications network.
- Figure 8: is a flowchart depicting embodiments of a method in a CU.
- Figure 9: is schematic block diagrams illustrating an embodiment of a CU.
- Figure 10: is a flowchart depicting embodiments of a method in a first network node.
- Figure 11: is schematic block diagrams illustrating an embodiment of a first network node.
- Figure 12: is schematic block diagrams illustrating an embodiment of an IAB network.
- Figure 13: is schematic block diagrams illustrating an embodiment of an IAB network.
- Figure 14: is schematic block diagrams illustrating an embodiment of an IAB network.
- Figure 15: is schematic block diagrams illustrating an embodiment of an IAB network.
- Figure 16: schematically illustrates a telecommunication network connected via an intermediate network to a host computer.
- Figure 17: is a generalized block diagram of a host computer communicating via a base station with a user equipment over a partially wireless connection.
- Figures 18-21: are flowcharts illustrating methods implemented in a communication system including a host computer, a base station and a user equipment.

### DETAILED DESCRIPTION

As a part of developing embodiments herein a problem was identified and will first be discussed.

As already discussed above, destination-address-based routing has been proposed for forwarding packets in IAB networks. However, destination-address-based routing has several drawbacks, such as:
- It contains only information about the final node, i.e. the destination node, and does not know anything about other nodes along the path(s) to the final node/destination node. Hence, it is not possible to infer proper QoS treatment by considering things like the number of hops to be traversed further in order to reach the destination node.
- In destination-address-based routing each node may only select the next node along the path (not the whole path) since the whole path is not conveyed in the destination address. Thus, the end nodes cannot select alternative paths to the same target IAB node.
- Unable to support and/or provide differentiated routing for packets belong to different DRBs or backhaul RLC channels for the same UE or IAB node. Additional identification (i.e. UE-specific ID or UE-bearer specific ID) will be needed to carry in the Adaptation layer header for differentiated QoS treatment.
- Updating the cost metric (every time when the network load changes) in the IAB nodes by the Donor-CU will cause high signaling overhead assuming it is performed in a distributed manner as typically is done in destination based routing.

Packets for a given target node, e.g. the destination node, might be forwarded to different next-hop nodes (when the routing tables in the IAB nodes hold multiple next-hop entries for the same destination address) by an intermediate IAB node, which might reach in an out-of-order sequence and may increase the overall End to End (E2E) latency for data transfer.

An object of embodiments herein is therefore to improve the performance of an IAB communications network for forwarding data packet to a destination node. Some embodiments disclosed herein address these issues by proposing an efficient Route ID based routing method. Sometimes in this disclosure the data packet is referred to as just data or to just a packet, and the terms "data packet", data" and "packet" may be used interchangeably. Further, sometimes in this disclosure, the term "data packet", "data" or "packet" are referred to as "traffic".

It should be understood that one or more features from one or more exemplifying embodiments may be combined.

Embodiments disclosed herein relate to the use a route ID for routing/forwarding packets in IAB networks, where the route ID is used for implementing one or more functionalities in the end node, such as in an access IAB node or in a Donor DU, or the intermediate nodes, such as in one or more intermediate IAB nodes. The access IAB node is an end IAB node to which a UE may be directly connected to. One or more of the following functionalities may be implemented using the route ID:
- QoS enforcement
- Load balancing
- Re-routing of traffic at radio link failures
- Fairness handling
- Active queue management (e.g. controlled packet drops)

These functionalities are possible to implement because the route ID conveys information about the number of hops along the path, as well as optionally information about QoS priority, alternative paths etc.

**Figure 6** schematically illustrates exemplifying operational actions for a route ID based packet forwarding scheme. First, in order to achieve better load balancing and make routing of traffic robust against network link failures, a centralized entity, e.g. a CU 134 such as a Donor CU-CP, **checks 601** if there is any change in the network topology and if so it **computes 602** all possible routes in the communications network using topology information. The topology information comprises information describing the arrangement of the elements, such as links, nodes, etc., of the communication network and may be acquired during an IAB node integration procedure, e.g. when the IAB communications network is set up or during addition or deletion of one or more nodes. Then, the CU 134, e.g. the Donor CU-CP, signals, i.e. **transmits 603,** the routes information to a first network node 110,132 such as the IAB nodes 110 and Donor DUs 132 operating in an IAB communications network 100. The route information may comprise a route ID and information about one or more nodes comprised in a route, i.e. in a path. In this disclosure the terms "route" and "path" may be used interchangeably. The IAB nodes and Donor DUs **store 604** the received route information in e.g. their databases. Next, whenever the intermediate IAB nodes 110 and Donor DUs 132 **receive 605** a packet, they employ the route ID and their own identity information, e.g. the IAB node 110 IDs or Donor DU 132 IDs, to **compute 606** the next hop for **forwarding 607** the packets using the routes database. Finally, the Donor CU-CP 134 **updates 608** the routes whenever the network topology changes, e.g. when a new IAB node is integrated or when an operational IAB node goes down, and sends the updates to the IAB nodes 110 and Donor DUs132. For the DL transmission, the header, while for the UL transmission, the route ID will be added by the access IAB node 110. In both cases, the intermediate nodes will forward the route ID on the next hop.

When the **network topology changes 601,** e.g. when new IAB nodes are attached to the network, or/and one or more IAB nodes disconnected from the network, etc., the CU 134, e.g. the centralized entity (Donor CU-CP), will **update routes 608** for affected destination nodes along with computing new routes to the newly attached nodes. These routes will be signaled only to the relevant IAB nodes.

Apart from performing the routing function, embodiments herein may also be used for additional novel purposes. Some of these additional services and/or purposes are given below.

**QoS enforcement:** QoS differentiation may be provided, e.g. implemented, by using different paths to the same destination, e.g. the same destination node, for packets with different QoS requirements. An additional level of QoS may be implemented and/or provided by assigning multiple IDs to a given path, where each ID signifies a different level of priority/treatment. Thus, for the same path to a destination, high priority packets belonging to that destination will be assigned a high priority route ID, by the Donor CU-CP 134 in the DL, and by the access IAB node 110 in the UL, for the path and vice versa.

**Load Balancing:** The end nodes, such as an access IAB node 110 and a Donor DU 132, may use the Route ID method to divide traffic among different routes/paths to target/destination nodes and avoid congesting any link or path of the IAB network. By the term "end nodes" when used in this disclosure is meant the end nodes for a given path. For example, for a path given by DU1→IAB1→IAB3→IAB5→IAB7, the end nodes are DU1 and IAB7. Similarly, for a path given by DU1→IAB1→IAB3→IAB5, the end nodes are DU1 and IAB5. Further, the end nodes IAB7 and IAB5 may be referred to as access IAB nodes for the respective path.

**Rerouting traffic during Radio Link Failure (RLF):** The intermediate IAB nodes 110 may easily reroute the traffic by just modifying the Route ID in the packet's header during RLF. The intermediate nodes will know other routes to the intended destination for the packets and may use their IDs for replacing the prior Route ID (the packet's headers) for the path with destination no longer reachable due to RLF.

**Fairness handling:** The route ID comprises information not only about the target node and the source node but also about the path hop count and the number of hops the packets have to traverse further towards the destination, e.g. the target node. This makes possible for intermediate IAB nodes 110 to prioritize traffic/packets associated with a long path, in terms of hop count, containing multiple hops. Similarly, the route ID may give information on how many other IAB nodes 110 are connected on the same path, which may also be used as input to traffic prioritization.

### Enabling efficient Active Queue Management (AQM)

AQM for IAB network may efficiently be implemented when using Route ID based method to forward the packets. By comparing the remaining timestamp for packets with the number of hops to be traversed further, the AQM entity for the network may assess whether or not the packets may be routed to the destination within the required delay budget packets. Thus, packets may be dropped even before their delay budget expires, avoiding network congestion. Also, path for packets may instantly be changed, e.g. by the intermediate IAB nodes 110, to route the packets on a less congested path, making possible to achieve their latency requirements.

Some embodiments disclosed herein comprise one or more of the following advantages:
- A fine granular QoS is provided for routing packets in an IAB network using only one field, e.g. the route ID, in the Adaptation layer header.
- Routing for packets may easily and/or dynamically be changed by the Donor DU 132 by just updating the route ID in the packet's header without any signaling to reconfigure the mapping rules at the intermediate IAB nodes 110.
- Intermediate IAB nodes 110 may reroute the packets, e.g. in case of a RLF scenario, just by changing the route ID in the Adaptation layer header.
- Active queue management for IAB network may efficiently be implemented when using Route ID based method to forward the packets.

In summary, embodiments disclosed herein are more flexible, requires a small size Adaptation header, and requires a less signaling overhead.

Embodiments herein are mostly exemplified with NR, LTE wireless devices but it may be applicable to other wireless devices which are served by other Radio Access Technologies such as CAT-M, NB-IoT, WiFi, or NR Carriers.

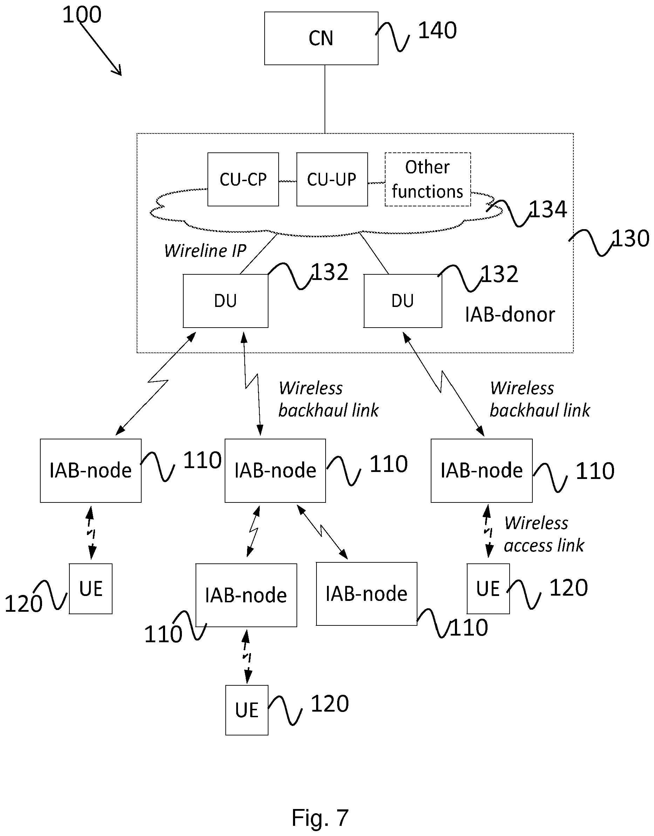

Embodiments herein relate to wireless communication networks in general. **Figure 7** is a schematic overview depicting **a wireless communications network 100, such as an IAB network 100.** The wireless communications network 100 may be referred to as a radio communications network. The wireless communications network 100 comprises one or more Radio Access Networks (RANs) and one or more Core Networks (CNs). The radio communications network 100 may use a number of different Radio Access Technologies (RATs), such as Narrow Band Internet of Things (NB-IoT), Cathegory M (CAT-M), Wi-Fi, eMTC, LTE, LTE-Advanced, 5G, New Radio (NR), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Sometimes in this disclosure the wireless communications network 100 is referred to as just a network.

In the wireless communication network 100, wireless devices e.g. **one or more wireless devices 120** also referred to UEs 120, are operating in the wireless communications network 100. As schematically illustrated in Figure 7, the UE 120 may communicate with a network node, e.g. a network node 110 such as an IAB-node which will be described below.

The wireless devices 120 may each e.g. be a mobile station, a non-Access Point (non-AP) STA, a STA, a user equipment (UE) and/or a wireless terminals, an NB-IoT device, an eMTC device, a CAT-M device, a WiFi device, an LTE device and an NR device communicating via one or more Access Networks (AN), e.g. RAN, to one or more Core Networks (CN). It should be understood by the skilled in the art that "wireless device" is a non-limiting term which means any terminal, wireless communication terminal, user equipment, Device to Device (D2D) terminal, or node e.g. smart phone, laptop, mobile phone, sensor, relay, mobile tablets or even a small base station communicating within a cell.

In this disclosure, the terms wireless device, terminal and UE are used interchangeably.

Network nodes 110 operate in the radio communications network 100. The network nodes may be one or more **IAB-nodes 110** providing radio coverage over a respective geographical area which area which may be referred to as a cell, a beam or a beam group of a first Radio Access Technology (RAT), or a second RAT. The first and second RATs may be different RATs such as one of the RATs is a NR, 5G, LTE, Wi-Fi, NB-IoT, CAT-M, Wi-Fi, eMTC or similar, and the other RAT is another one of the NR, 5G, LTE, Wi-Fi, NB-IoT, CAT-M, Wi-Fi, eMTC or similar. The network node 110 may be a transmission and reception point e.g. a radio access network node such as a Wireless Local Area Network (WLAN) access point or an Access Point Station (AP STA), an access controller, a base station, e.g. a radio base station such as a NodeB, an evolved Node B (eNB, eNode B), a Next Generation Radio Access Network eNB (NG-RAN eNB, ng-eNB), a gNB, a base transceiver station, a radio remote unit, an Access Point Base Station, a base station router, a transmission arrangement of a radio base station, a stand-alone access point or any other network unit capable of communicating with a wireless device within the service area served by the network node 110 depending e.g. on the radio access technology and terminology used. The network node 110 may be referred to as a serving radio network node and communicates with the wireless device 120 with Downlink (DL) transmissions to the wireless device 120 and Uplink (UL) transmissions from the wireless device 120.

Further network nodes operate in the radio communications network 100, such as **an IAB donor 130.** The IAB-donor 130 may be treated as a single logical node that comprises a set of functions such as gNB-Du, gNB-CU-CP, gNB-CU-UP and potentially other functions. As schematically illustrated in Figure 7, the IAB-donor 130 may comprise one or more **Distributed Units (DUs) 132** and **a Central Unit (CU) 134.** The CU 134 is exemplified as comprise a CU Control Plane unit (CU-CP), a CU User Plane unit (CU-UP), and other functions Examples of such other functions are Donor-DU, IAB-DU, just to give some examples.

Further, **a part of the Core Network (CN) 140** may be comprised in the IAB-network 100 and connected to the IAB-CU-CP 134.

### Actions of some example embodiments disclosed herein

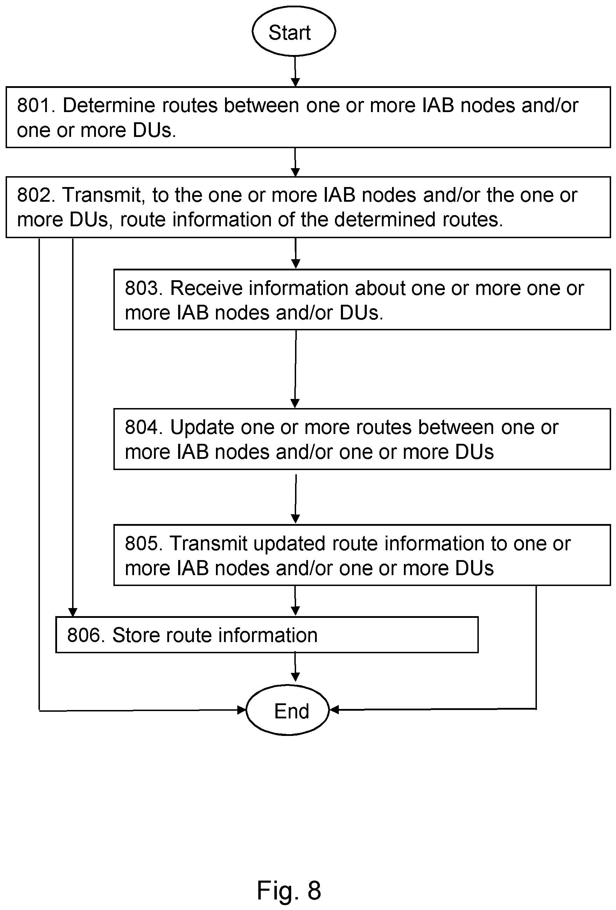

Example embodiments of a flowchart depicting embodiments of **a method performed by the CU 134,** e.g. for assist in routing a data packet towards a UE 120, is depicted in **Figure 8** and will now be described in more detail. The CU 134 and the UE 120 are operating in an IAB communications network 100. The method may comprise one or more of the actions below. The actions may be combined. Further, actions may be performed in another suitable order.

### Action 801

Based on topology information for the IAB communications network 100, the CU 134 determines all possible routes, between one or more IAB nodes 110 and/or one or more DUs 132 operating in the IAB communications network 100. This is e.g. in order to properly configure routing tables for the IAB nodes 110 that will be used for forwarding the data packet and signaling traffic within the IAB communication network 100.

To determine the routes, e.g. all the possible routes, e.g. means that the data packet and signalling traffic can be forwarded towards the one or more IAB nodes 110 and CU 134 via several different routes which is useful for load balancing purposes and handling radio link failure situations.

### Action 802

In order to properly route the data packet and signaling traffic the CU 134 transmits route information of the determined routes to the one or more IAB nodes 110 and/or the one or more DUs 132. Each respective route information comprises a route identity and a respective node identity of the one or more IAB nodes 110, e.g. next IAB nodes 110, and/or DUs 132 comprised in the respective route. Next IAB nodes mean other intermediate IAB nodes 110 and the destination/final node, such as the UE 120, for the packet on a given route.

In this way the IAB nodes 110 will check if a received packet is destined for them or any other IAB node 100 in the IAB communications network 100 and then select a correct next hop link for the received data packet based on the routing information, e.g. destination node identity, in the packet header.

### Action 803

In some embodiments, the CU 134 receives information about one or more one or more IAB nodes 110 and/or DUs 132 to be added to or deleted from the IAB communications network 100. The CU 134 may further, receive information about one or more route identities. This is to keep the CU 134 up-to-date about the status of the underlying network.

### Action 804,

The CU 134 may then update one or more routes between one or more IAB nodes 110 and/or one or more DUs 132 in dependence of the received information. This is to keep the routing tables of the IAB nodes up-to-date.

### Action 805

In order to enable the IAB nodes 110 to make routing decision based on the current state of the communication network, the CU 134 may transmit the updated route information to one or more IAB nodes 110 and/or one or more DUs 132.

### Action 806,

In order to know the current state of the communication network, the CU 134 may store route information.

To perform the method actions e.g. for assist in routing a data packet towards a UE 120, the CU 134 may comprise the arrangement depicted in **Figure 9****.** The CU 134 may e.g. comprise **a transmitting unit, a receiving unit, a determining unit, an updating unit, and a storing unit.**

Those skilled in the art will also appreciate that the units in the CU 134 described above may refer to a combination of analog and digital circuits, and/or one or more processors configured with software and/or firmware, e.g. stored in the CU 134, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The CU 134 may comprise **an input and output interface** configured to communicate with one or more network nodes, e.g. with the network nodes 110,132 and the CN 140. The input and output interface may comprise a wireless receiver (not shown) and a wireless transmitter (not shown).

The embodiments herein may be implemented through a respective processor or one or more processors, such as the **processor** of a processing circuitry in CU 134 depicted in Figure 9, together with respective computer program code for performing the functions and actions of the embodiments herein. The program code mentioned above may also be provided as a computer program product, for instance in the form of a data carrier carrying computer program code for performing the embodiments herein when being loaded into the CU 134. One such carrier may be in the form of a CD ROM disc. It is however feasible with other data carriers such as a memory stick. The computer program code may furthermore be provided as pure program code on a server and downloaded to the CU 134.

The CU 134 may further comprise a **memory** comprising one or more memory units. The memory comprises instructions executable by the processor in the CU 134.

The memory is arranged to be used to store e.g. data, configurations, and applications to perform the methods herein when being executed in the CU 134.

Some embodiments of the CU 134 may comprise:
a radio circuitry configured to receive information and to transmit route information;
a storage, configured to store route information; and
a processing unit configured to determine routes in the IAB network.

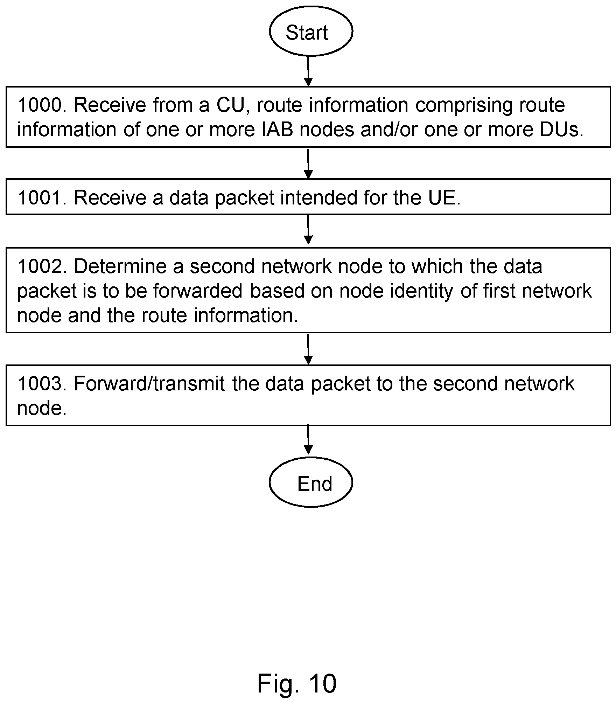

Example embodiments of a flowchart depicting embodiments of **a method performed by** a first network node 110,132, e.g. by the IAB-node 110 or the DU 132, e.g. for assist in routing a data packet towards a target node, e.g. a UE 120, is depicted in **Figure 10** and will be described more in detail in the following. As previously mentioned the network node 110,132 and the UE 120 are operating in an IAB communications network 100. The method may comprise one or more of the following actions which actions may be taken in any suitable order. Further, it should be understood that one or more actions may be optional and that actions may be combined.

### Action 1000

The first network node 110,132, receives route information from the CU 134. The route information comprises information of all possible routes in the IAB communications network 100. Each respective route information comprises a route identity and a respective node identity of one or more IAB nodes 110 and/or one or more DUs 132 comprised in the respective route.

### Action 1001

The first network node 110,132, e.g. the IAB-node 110 or the DU 132, receives a data packet intended for the UE 120.

### Action 1002

In order to route the data packet, the first network node 110,132 determines a second network node 110,132 to which the data packet is to be forwarded based a node identity of the first network node 110,132 and based on route information received from the CU 134 operating in the IAB communications network 100. This is an advantage compared to prior art since in this way changes in the state of the IAB communications network 100 may quickly be reflected in the routing decisions.

In some embodiments, the determining of the second network node 110,132, to which the data packet is to be forwarded, is further based on information in a header of the data packet. The information in the header of the data packet, i.e., in a Backhaul Adaptation Protocol (BAP) header is useful for the routing decision. This is since the header such as the BAP header contains the intended destination node identity and the route identity for the data packet.

The route information may be stored, by the first network node 110, 132 in a memory.

The second network node is different from the first network node110, 132. If the first network node is a DU 132, the second network node may be an IAB-Node 110. Further, if the first network node is an IAB-node 110, the second network node may be another IAB-node 110, e.g. an intermediate IAB-node, or it may be the DU 132. The route information comprises information of all possible routes in the IAB communications network 100. Each respective route information comprises a route identity and a respective node identity of one or more IAB nodes 110 and/or one or more DUs 132 comprised in the respective route. The respective route identity identifies the respective route. The respective node identity identifies the IAB nodes 110 and/or the DUs 132 along the route.

### In Action 1003

The first network node 110,132 forwards, also referred to as transmits, the data packet to the second network node 110,132, which second network node 110,132 was determined by the first network node110,132. As mentioned above, the second network node is different from the first network node110, 132. If the first network node is a DU 132, the second network node may be an IAB-Node 110. Further, if the first network node is an IAB-node 110, the second network node may be another IAB-node 110, e.g. an intermediate IAB-node, or it may be the DU 132.

In some embodiments, the first network node 110,132 determines the second network node by further performing one or more out of the following:
- Determining the second network node 110,132 for the data packet based on a QoS requirement associated with the data packet. This affects the determining since it would be an advantage if the first network node 110, 132 determines a second network node that fulfils the QoS requirement associated with data packet;
- Determining the second network node 110,132 for the data packet based on a traffic load in one or more routes to the UE 120; This affects the determining since it would be an advantage if the first network node 110,132 determines a second network node in a route that is not overloaded by traffic.
- Determining the second network node 110,132 for the data packet based on a radio link failure in one or more routes to the UE 120; It is an advantage if the first network node 110,132 determines a second network node in a route that has no radio link failure.
- Determining the second network node 110,132 for the data packet based on the number of intermediate nodes 110,132 to traverse in one or more routes to the UE 120. The first network node 110,132 may preferably determines a second network node in a route with as few as possible number of intermediate nodes 110,132 to traverse.
- Determining the second network node 110,132 for the data packet based on a comparison between a remaining timestamp for the data packet and the number of intermediate nodes 110,132 to traverse in one or more routes to the UE 120 and selecting the second network node 110,132 as the node in the route providing delivery of the data packet within a required delay budget and/or within a specified time period.

It should be noted that these will be more discussed below.

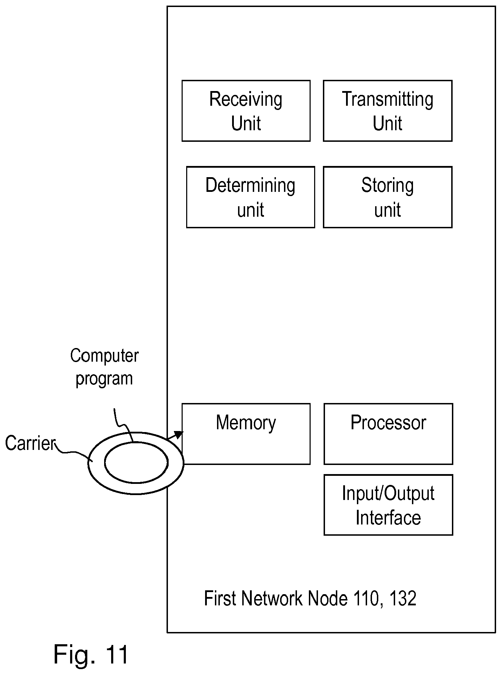

To perform the method actions e.g. for assist in routing a data packet towards a target node, e.g. a UE 120, the first network node 110,132 may comprise the arrangement depicted in **Figure 11****.** The first network node 110,132 may e.g. comprise **a transmitting unit, a receiving unit, a determining unit,** and **a storing unit.**

Those skilled in the art will also appreciate that the units in the first network node 110,132 described above may refer to a combination of analog and digital circuits, and/or one or more processors configured with software and/or firmware, e.g. stored in the first network node 110,132 that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The first network node 110,132 may comprise **an input and output interface** configured to communicate with one or more out of the wireless device 120 and the CU 132. The input and output interface may comprise a wireless receiver (not shown) and a wireless transmitter (not shown).

The embodiments herein may be implemented through a respective processor or one or more processors, such as the **processor** of a processing circuitry in first network node 110,132 depicted in Figure 11, together with respective computer program code for performing functions and actions of the embodiments herein. The program code mentioned above may also be provided as a computer program product, for instance in the form of a data carrier carrying computer program code for performing the embodiments herein when being loaded into the first network node 110,132. One such carrier may be in the form of a CD ROM disc. It is however feasible with other data carriers such as a memory stick. The computer program code may furthermore be provided as pure program code on a server and downloaded to the first network node 110,132.

The first network node 110,132 may further comprise a **memory** comprising one or more memory units. The memory comprises instructions executable by the processor in the first network node 110,132.

The memory is arranged to be used to store e.g. data, configurations, and applications to perform the methods herein when being executed in the first network node 110,132.

Some embodiments of the first network node 110,132 may comprise:
a radio circuitry configured to receive information, e.g. route information, from the CU 134, data packet from another node in the network and to transmit information and data packet to another node in the network,
a storage configured to store received information, e.g. received route information, and
a processing unit configured to determine a second network node.

In some embodiments, a respective **computer program** comprises instructions, which when executed by the respective at least one processor, cause the at least one processor of the CU 134 to perform one or more of the actions described herein.

In some embodiments, a respective **computer program** comprises instructions, which when executed by the respective at least one processor, cause the at least one processor of the network node 110, 132, e.g. the IAB-node 110, and/or the DU 132, to perform the actions described herein.

In some embodiments, a respective **carrier** comprises the respective computer program, wherein the carrier is one of an electronic signal, an optical signal, an electromagnetic signal, a magnetic signal, an electric signal, a radio signal, a microwave signal, or a computer-readable storage medium.

### Below a more detailed description will follow.

Embodiments disclosed herein may be separated into different parts which will be described in more detail below.

### Some exemplifying embodiments

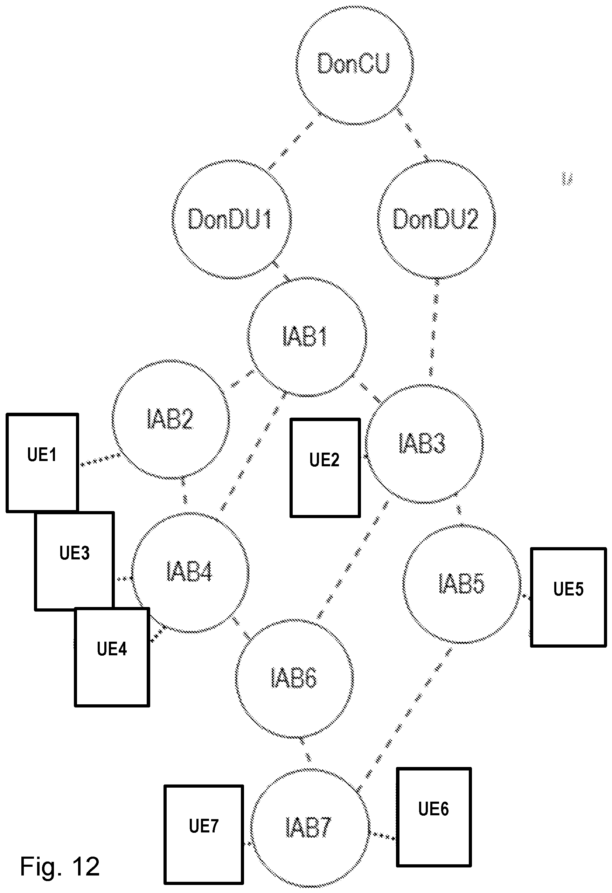

Figure 12, 13, 14 and 15 are used to describe some exemplifying embodiments herein. The CU 134 is referred to as **DonCU** and **IAB CU.** The IAB nodes 110 are referred to as **IAB1-IAB7.** The DUs 132 are referred to as **DonDU1, DonDU2, IAB DU1** and **IAB DU2.**

**Figure 12** schematically illustrates an example of Route ID based routing in an IAB network, e.g. the communications network 100. In Figure 12, the IAB network routes with unidirectional Identities (IDs) comprises:
ID1 → DU1-IAB1
ID2 → IAB1-DU1
ID3 → DU1-IAB1-IAB2
ID4 → IAB2- IAB1- DU1
ID5 → DU2-IAB3
ID6 → DU1-IAB1-IAB3
ID7 → IAB3-DU2
ID8 → IAB3-IAB1-DU1
ID9 → DU1-IAB1-IAB4
ID10 → IAB4-IAB1-DU1
ID11 → DU1-IAB1-IAB2-IAB4
ID12 → IAB4-IAB2-IAB1-DU1
ID13 → DU2- IAB3- IAB5
ID14 → DU1-IAB1-IAB3-IAB5
ID15 → IAB5-IAB3-DU2
ID16 → IAB5-IAB3-IAB1-DU1
ID17 → DU2-IAB3-IAB6
ID18 → DU1-IAB1-IAB3-IAB6
ID19 → DU1-IAB1-IAB4-IAB6
ID20 → IAB6-IAB3-DU2
ID21 → IAB6-IAB3-IAB1-DU1
ID22 → IAB6-IAB4-IAB1-DU1
ID23 → DU2-IAB3-IAB5-IAB7
ID24 → DU2-IAB3-IAB6-IAB7
ID25 → DU1-IAB1-IAB3-IAB6-IAB7
ID26 → DU1- IAB1-IAB4-IAB6-IAB7
ID27 → IAB7-IAB5-IAB3-DU2
ID28 → IAB7-IAB6-IAB3-DU2
ID29 → IAB7-IAB6-IAB3-IAB1-DU1
ID30 → IAB7-IAB6-IAB4-IAB1-DU1

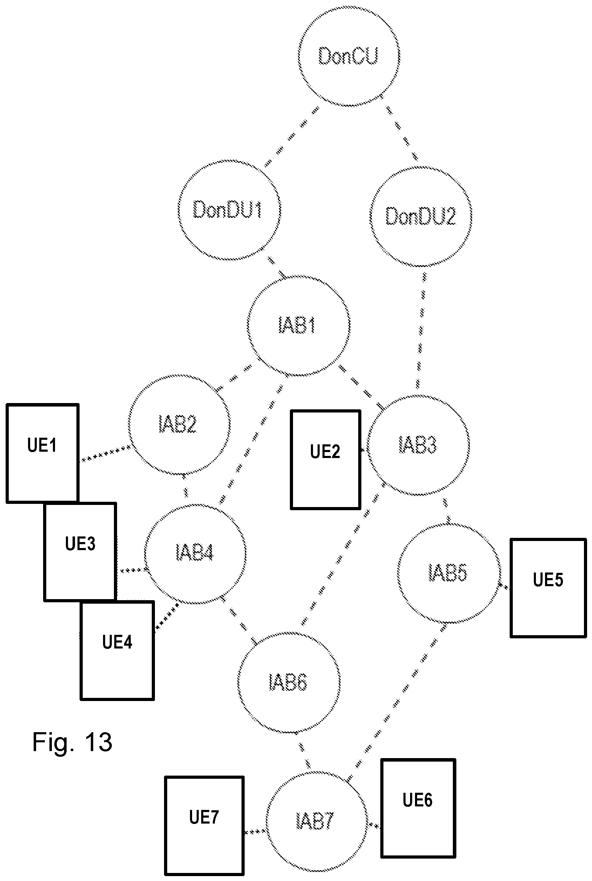

**Figure 13** schematically illustrates an example of multiple route IDs per path. In Figure 13, routes with multiple IDs for IAB 4 comprises:
ID9a → DU1-IAB1-IAB4 → High priority
ID9b → DU1-IAB1-IAB4 → Medium priority
ID9c → DU1-IAB1-IAB4 → Low priority
ID10a → IAB4-IAB1-DU1 → High priority
ID10b → IAB4-IAB1-DU1 → Medium priority
ID10c → IAB4-IAB1-DU1 → Low priority
ID11a → DU1-IAB1-IAB2-IAB4 → High priority
ID11b → DU1-IAB1-IAB2-IAB4 → Medium priority
ID11c → DU1-IAB1-IAB2-IAB4 → Low priority
ID12a → IAB4-IAB2-IAB1-DU1 → High priority
ID12b → IAB4-IAB2-IAB1-DU1 → Medium priority
ID12c → IAB4-IAB2-IAB1-DU1 → Low priority

In Figure 13, the routes with multiple IDs for IAB 6 comprises:
ID17a → DU2-IAB3-IAB6 → High priority
ID17b → DU2-IAB3-IAB6 → Medium priority
ID17c → DU2-IAB3-IAB6 → Low priority
ID18a → DU1-IAB1-IAB3-IAB6 → High priority
ID18b → DU1-IAB1-IAB3-IAB6 → Medium priority
ID18c → DU1-IAB1-IAB3-IAB6 → Low priority
ID19a → DU1-IAB1-IAB4-IAB6 → High priority
ID19b → DU1 IAB1-IAB4-IAB6 → Medium priority
ID19c → DU1 IAB1-IAB4-IAB6 → Low priority
ID20a → IAB6- IAB3- DU2 → High priority
ID20b → IAB6- IAB3- DU2 → Medium priority
ID20c → IAB6- IAB3- DU2 → Low priority
ID21a → IAB6-IAB3-IAB1-DU1 → High priority
ID21b → IAB6-IAB3-IAB1-DU1 → Medium priority
ID21c → IAB6-IAB3-IAB1-DU1 → Low priority
ID22a → IAB6-IAB4-IAB1-DU1 → High priority
ID22b → IAB6-IAB4-IAB1-DU1 → Medium priority
ID22c → IAB6-IAB4-IAB1-DU1 → Low priority

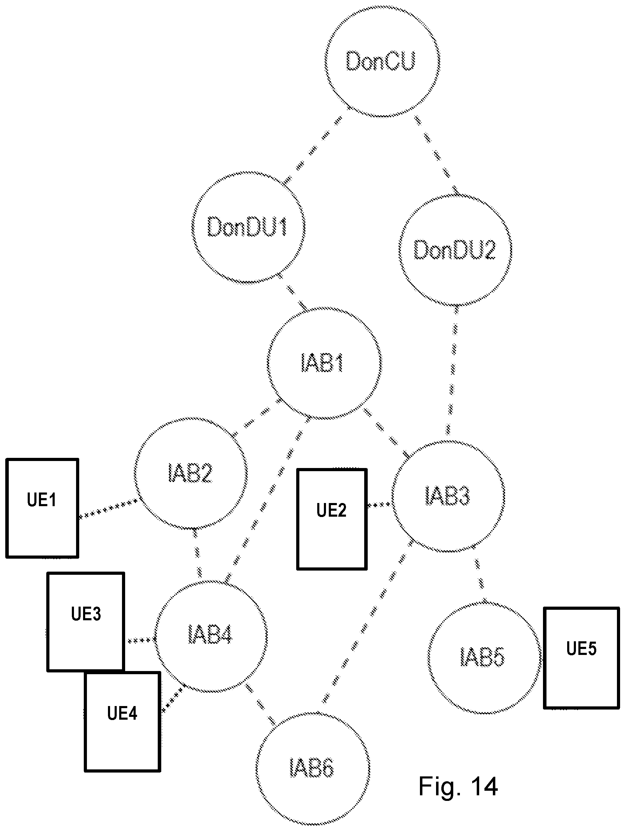

**Figure 14** schematically illustrates an example of updating the set of routes after IAB7 node disconnected from the network. In Figure 14, updated IAB network routes with unidirectional IDs comprises:
ID1 -→ DU1-IAB1
ID2 -→ IAB1-DU1
ID3 -→ DU1-IAB1-IAB2
ID4 -→ IAB2-IAB1-DU1
ID5 -→ DU2- IAB3
ID6 -→ DU1-IAB1-IAB3
ID7 -→ IAB3-DU2
ID8 -→ IAB3-IAB1-DU1
ID9 -→ DU1- IAB1- IAB4
ID10 -→ IAB4-IAB1-DU1
ID11 -→ DU1-IAB1-IAB2-IAB4
ID12 -→ IAB4-IAB2-IAB1-DU1
ID13 -→ DU2-IAB3-IAB5
ID14 -→ DU1-IAB1-IAB3-IAB5
ID15 -→ IAB5-IAB3-DU2
ID16 -→ IAB5-IAB3-IAB1-DU1
ID17 -→ DU2-IAB3-IAB6
ID18 -→ DU1-IAB1-IAB3-IAB6
ID19 -→ DU1-IAB1-IAB4-IAB6
ID20 -→ IAB6-IAB3-DU2
ID21 -→ IAB6-IAB3-IAB1-DU1
ID22 -→ IAB6-IAB4-IAB1-DU1

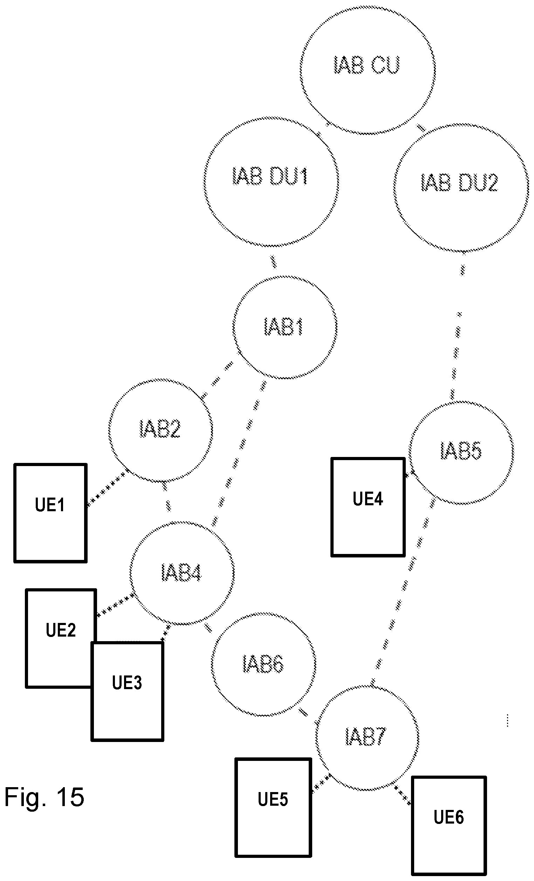

**Figure 15** schematically illustrates an example of updating the set of routes after one IAB-node 110, e.g. the IAB3 node, has been disconnected from the network, e.g. the network 100. In Figure 15, the IAB network routes with unidirectional IDs comprises:
ID1 -→ DU1-IAB1
ID2 -→ IAB1-DU1
ID3 -→ DU1-IAB1-IAB2
ID4 -→ IAB2-IAB1-DU1
ID5 -→ DU1-IAB1-IAB4
ID6 -→ IAB4-IAB1-DU1
ID7 -→ DU1-IAB1-IAB2-IAB4
ID8 -→ IAB4-IAB2-IAB1-DU1
ID9 -→ DU2-IAB5
ID10 -→ IAB5-DU2
ID11 -→ DU1-IAB1-IAB4-IAB6
ID12 -→ IAB6-IAB4-IAB1-DU1
ID13 -→ DU2- IAB5-IAB7-IAB6
ID14 -→ IAB6-IAB7-IAB5-DU2
ID15 -→ DU2-IAB5-IAB7
ID16 -→ IAB7-IAB5-DU2
ID17 -→ DU1-IAB1-IAB4-IAB6-IAB7
ID18 -→ IAB7-IAB6-IAB4-IAB1-DU1

In architecture 1a, the topology-, route- and resource management is centrally managed by Donor CU-CP See Section 9.6 in the 3GPP standard TR 38.874. Thus, the Donor CU-CP, e.g. the CU 134, will have all the information available for computing routes to/from all IAB nodes110, e.g. the IAB-nodes 110, in a network, e.g. in the network 100. The illustrative example in figure 12 shows a set of routes computed by the Donor CU-CP (**DonCU**) for the given IAB topology. Either the whole set or a specific subset of routes will be signaled (using the RRC/F1-AP) to each IAB node (**IAB1-IAB7**), where the routes will be stored for forwarding the packets. For instance, the **IAB2** will be signaled only the subset {ID3, ID4, ID11, ID12} since IAB2 will always receive and forward packets containing these route IDs in the Adaptation layer header. However, storing the whole set or an enlarged subset of routes in the IAB nodes 110 will be beneficial for other purposes, such as for load balancing, rerouting packets when RLF occurs, etc., which are explained below. The IAB nodes, e.g. the IAB-node 110, may perform one or more of the following actions a)-d) when they receive a packet.

**Action a)** *Forward the packets to the next hop in the route ID or to the UE 120 if this node is the endpoint*/*target*/*destination in the route.*

For example, if **IAB4** receive a packet with route ID 26, then by locating its own ID (IAB4) in the route, the packet will be forwarded to next hop, i.e. **IAB6,** while packet with route ID 11 will be terminated in the **IAB4,** and then transmitted to an appropriate UE 120. Note that by IAB node ID we could mean any identifier that may uniquely identify the IAB node (e.g. the gNB-DU/CU UE F1AP context ID that was used for identifying the MT part of the IAB-node when the IAB node gets attached, a new L2 IAB-node-address/IAB-node DU-address defined in TR 38.874 for L2 routing, etc.)

**Action b)** *Forward the packets containing irrelative route ID, i.e. a route not passing via the node that received the packets, to an appropriate neighbor IAB node.*

For example, if for some reason such as one described below in Action c, **IAB2** receives packets with route ID 25 that was not supposed to pass via **IAB2.** However, **IAB2** neighbor node (**IAB1**) is included in the route with route ID 25, hence the packets will be forwarded to **IAB1.** For some scenarios, it is possible that neither of the neighbor nodes is part of the route. In such case, the IAB node will forward the packets to one of its neighbor nodes closer to the final destination for packets. For instance, if **IAB6** receives a packet with route ID 3 (**DU1-IAB1-IAB2**), where none of its neighbor nodes is included in route ID 3. However, from route ID 12 in the IAB route database, **IAB6** will know that its neighbor node **IAB4** is the closest node to the final destination (i.e. **IAB2**) for the packet and so will forward the packet to **IAB4.**

**Action c)** *Reroute the packets by changing the route ID in the packet's header when the final destination for packets cannot be reached via the original route, i.e. initial route ID in the packet header.*

For example, if the radio link between **IAB4** and **IAB6** goes down while **IAB4** receives packets with route ID 26. In this situation, if the **IAB4** has the whole set or an enlarged subset of routes stored in its routing database, then **IAB4** will know about the other routes to **IAB7** (**IAB7** is the final destination for the packets received by **IAB4**)**.** Thus, it will replace the route ID 26 with route ID 25 and will forward the packet to IAB1. The route ID in the packet's header may also be changed for other reasons, such as for QoS purposes, avoiding temporary congested link, etc. For example, if a link temporary becomes congested or its radio conditions become worse, then rerouting the packets by intermediate IAB nodes to other links with better conditions may be done by modifying/changing the route ID in the packet's header. Also, the packet route ID may be changed more than once (i.e., packets may be rerouted several times by intermediate IAB nodes110) before the packet reached to its final destination.

**Action d)** *Ensure packets mapping to an appropriate Backhaul RLC channel to meet their QoS requirements.*

The mapping configuration in IAB nodes 110 may be done by the CU 134 such as the Donor CU-CP, which will be updated as per need. This mapping configuration may be used as default mapping, which may be overruled by IAB nodes110 to instantly cope with the temporary variations in radio link conditions to meet the QoS requirements for data and/or traffic. One such example is given above in Action c, where the intermediate IAB nodes 110 may change links and/or paths for packets to meet their QoS requirements. QoS fairness may be enforced using the route hops since the IAB node 110 will know how far the final destination is for route ID contained in a received packet header. For example, **IAB1** will know that the final destination for a packet containing route ID 3 (in the Adaptation header) is one hop away while the final destination for a packet containing route ID 19 is two hops away. Using this information, the **IAB1** may map packets containing route ID 19 to a high priority Backhaul RLC channel compared to packets containing route ID 13. The IAB nodes 110 may overrule (when needed) the default mapping for traffic/packets carried by all the ingress backhaul RLC channels or only for some specific channels. Also, this information may be indicated to the IAB nodes 110 either implicitly or explicitly. One possibility is to predefine the sets of BH RLC channels, one set for carrying traffic and/or packets which are forwarded only via default mapping and another set for carrying traffic/packets which are forwarded via flexible mapping, i.e. overruled default mapping if needed. Besides, the number of BH RLC channels in each set may be varied based on the network traffic conditions and requirements. Another possibility is to use 1-bit Flag in the Adaptation packet header to indicate whether to use default mapping or flexible mapping for the packet. This Flag bit may either be part of the Route ID field in the Adaptation layer header (e.g., using/allocating the Most Significant Bit (MSB) or Least Significant Bit (LSB) in the Route ID field for the Flag bit) or a separate field in the Adaptation layer header.

The QoS differentiation in Route ID based routing could be implemented by taking the following actions:
- To provide QoS differentiation among packets for the same destination but distinct applications/services, different routes may be assigned to packets based on the QoS requirements of these services. For example, high priority data destined for **IAB4** may be routed via a shorter route, in terms of hop count, i.e. route ID 9, while low priority data via a longer route, i.e. route ID 11. Another approach may be to use the least congested route for high priority data. Since the Donor CU-CP, such as the CU 134, will centrally control and/or manage topology-, route- and resource management, the CU-CP will know how many UEs and/or bearers and what type of bearers are served by each IAB node 110, traffic load on each backhaul link, etc. Thus, using this information, the CU-CP , such as the CU 134, may estimate and/or calculate a congestion level for each route. Furthermore, the CU-CP, such as the CU 134,may employ different criteria for calculating the congestion level, such as (i) number of UEs whose data and/or traffic passes through at least one link of a given path; or (ii) number of UEs whose data/traffic passes through the most congested link of a given path; or a product of the number of links of a given path and (i) or (ii); or (iv) measuring and/or estimating packet latency for a given path, etc. Based on the congestion level of the network routes and QoS requirements of the traffic, the CU-CP, such as the CU 134, will appropriately configure and/or update the route assignment for the traffic destined to different destinations in the Donor DUs, such as the DUs 132.
- Further QoS differentiation may be provided by assigning X number of route IDs to a given route, where each ID may be used to signify a particular QoS level. **Figure 13** shows an example where X=3 IDs are assigned to each route destined to and/or from **IAB 4** and **IAB 6,** where each ID indicates a different level of priority. Note that such multiple IDs may be assigned to routes for all or some of the IAB nodes 110 in the network. To provide QoS differentiation, packets containing route ID 9a will be mapped to high priority Backhaul RLC channels at the backhaul links compared to packets containing route ID 9b and 9c. When it comes to differentiating among packets with same priority level but destined for different IAB nodes 110, packets destined for a relatively far (in terms of hop count) destination will get priority over the other packets. For example, packets containing route ID 19a will be mapped to high priority Backhaul RLC channel at backhaul links **DU1-IAB1** and **IAB1-IAB4** compared to packets containing route ID 9a.

The centralized entity (Donor CU-CP), e.g. the CU 134, may compute one and/or a common set of routes for all the IAB nodes 110 under different Donor DUs, such as shown in **Figure 12****.** Another possibility is to compute a separate set of routes for IAB nodes 110 under different Donor DUs and share each set of routes with relevant IAB nodes 110. In such case, IAB nodes 110 connected to more than one Donor DUs 132 will store one set of routes for each part of the network under a DU. Using a common and/or one set of routes for all IAB nodes 110 under different DUs could facilitate the network nodes to know which of their neighbor (parent/child) node(s) is/are connected to more than one Donor DUs 132. Thus, if an IAB node 110 loses connectivity with its Donor DU 132, it may inform the Donor CU 134 via the other Donor DU 132 of the neighbor nodes before it camps on the alternative node. For example, **IAB1** in **Figure 13** may inform Donor CU about RLF with Donor DU1 via **IAB3** before it camps to Donor DU2.

In case one or more IAB nodes 110 disconnect from the network, the Donor CU will update the set of routes and will also signal the relevant updates to network nodes. For instance, in **Figure 14** and **Figure 15** the Donor CU, such as the CU 134, updated the set of routes compared with Figure 12 after IAB7 and IAB3 disconnected from the network, respectively, which will also be shared/signaled to the other IAB nodes 110 of the network. Similarly, the set of routes is updated when one or more IAB nodes 110 attach/connect to the network and the updates are signaled to relevant IAB nodes 110.

The update of the route IDs may be done either in a delta or full configuration manner. For example:
- add route ID x with this configuration
- modify route ID y with this new configuration
- delete route ID z
- delete route IDs n1 to n2
- etc.

The update and configuration of routes may be performed via F1 or RRC signaling. For example, existing F1 messages such as gNB-CU configuration update messages may be used or new messages may be defined for the sole purpose of route information communication.

In some embodiments, it may be envisioned that the route update/configuration doesn't need to be performed one by one between the donor and each and every IAB node 110. Instead, the donor 132 updates only the first layer of IAB nodes 110 (i.e. IAB nodes 110 directly connected to the donor). These IAB nodes 110 then forward the update to their children, and so on, until the leaf nodes that have no children nodes are reached.

Apart from centrally controlled route management discussed above, a distributed or a mixture of centralized and distributed management may be envisioned. For example, when a node goes down (e.g. software needs update, has to be maintained, it has experienced backhaul link failure, etc.), it may notify its immediate neighbors so that they will use other routes instead. That is, the neighbor nodes will try to use only routes that don't pass through the node that had send the indication and if a packet arrives with a route ID that is mapped to a route that passes through the failed node, the route ID will be changed to another one that doesn't include the failed node. When the node comes up again (e.g. maintenance over, backhaul recovered, etc.), it may send an update and the neighbor nodes may start using the original routes again. Basically, the reception of the first indication may be considered as flagging the routing that includes the failed node as temporarily unavailable, while the reception of the second indication makes them available again. As discussed above, the neighbor nodes could also be used as a proxy to notify the donor about the failure of the node (e.g. a node notifies the DU when it receives a failure notification from its neighbor).

When there are several alternatives and/or paths available to route a data, the route ID included in a packet may be considered just as a recommendation from the CU on how IABs should route the data and the IAB nodes 110 may make the final decision on how to forward the data to. For example, in **Figure 12****,** assume a packet with route ID 9 was received at **IAB1.** If the radio conditions on the direct link between IAB1 and IAB4 is very bad, while those between **IAB1** and **IAB2** are excellent, **IAB1** may change the route ID to 11. The decision to change the route ID may be based not only on radio conditions but could also consider other factors such as the current congestion on that path (e.g. how many pending packets to be sent over that link). The decision to change the route may be completely left up to the IAB nodes 110, or it may be based on the configuration specified by the network. For example, signal level thresholds may be configured, where the IAB node 110 sticks to the original route if the radio conditions are above the specified threshold, but if they fall below the threshold, then the IAB node 110 will choose another alternative route (and route ID) that satisfies the threshold. Like signal level thresholds, buffer size thresholds could be specified as well, where alternative paths are used when the buffer size for packets destined to be forwarded on a certain link passes the specified threshold.

### Further Extensions and Variations

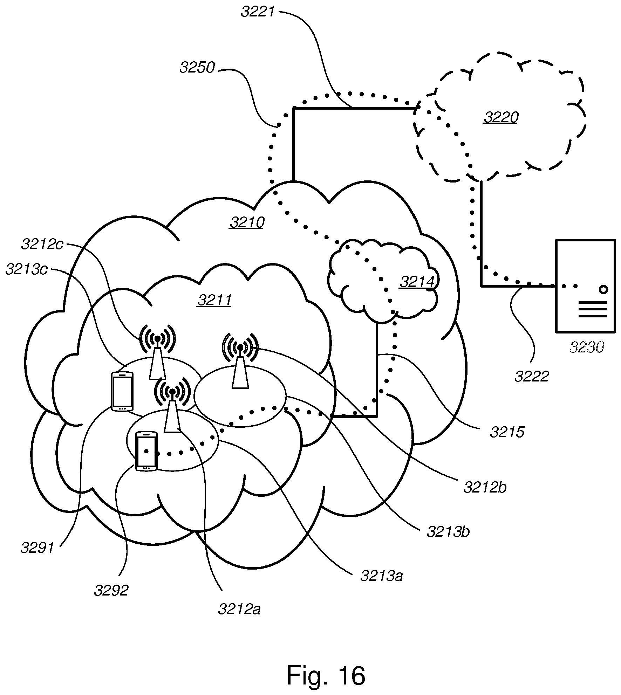

With reference to **Figure 16****,** in accordance with an embodiment, a communication system includes a telecommunication network 3210 such as the wireless communications network 100, e.g. a WLAN, such as a 3GPP-type cellular network, which comprises an access network 3211, such as a radio access network, and a core network 3214. The access network 3211 comprises a plurality of base stations 3212a, 3212b, 3212c, such as the network node 110, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the wireless device 120 such as a Non-AP STA 3291 located in coverage area 3213c is configured to wirelessly connect to, or be paged by, the corresponding base station 3212c. A second UE 3292 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

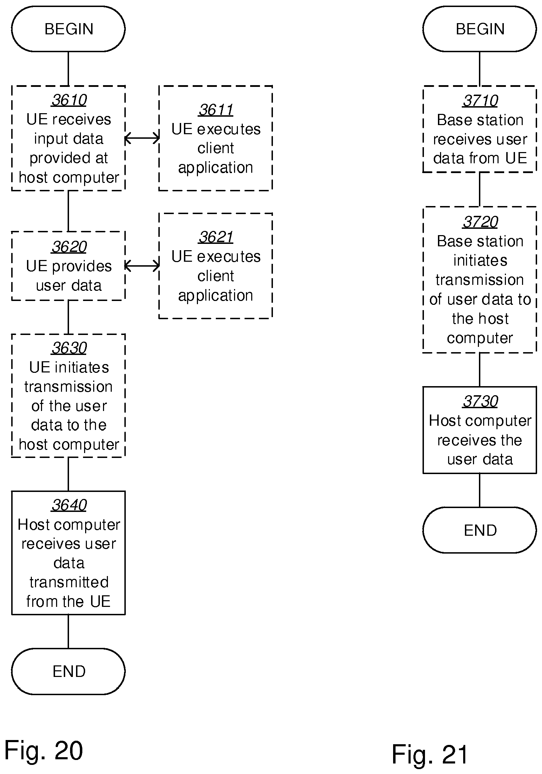

The communication system of Figure 20 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

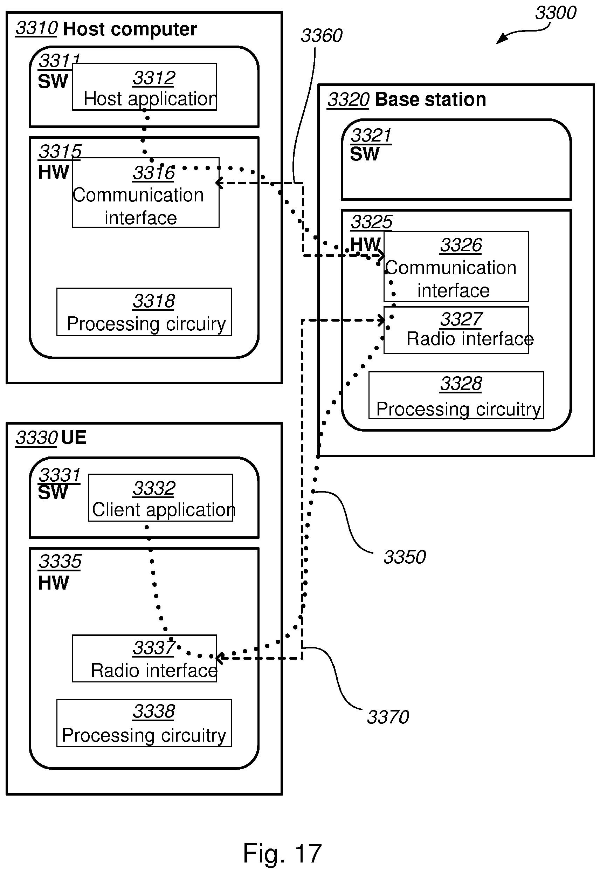

Example implementations, in accordance with an embodiment, of the UE, base station and host computer discussed in the preceding paragraphs will now be described with reference to **Figure 17****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 16) served by the base station 3320. The communication interface 3326 may be configured to facilitate a connection 3360 to the host computer 3310. The connection 3360 may be direct or it may pass through a core network (not shown in Figure 16) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 17 may be identical to the host computer 3230, one of the base stations 3212a, 3212b, 3212c and one of the UEs 3291, 3292 of Figure 16, respectively. This is to say, the inner workings of these entities may be as shown in Figure 17 and independently, the surrounding network topology may be that of Figure 16.

In Figure 17, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the pSIM scheduling allowing more positioning assistance data to be broadcasted.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

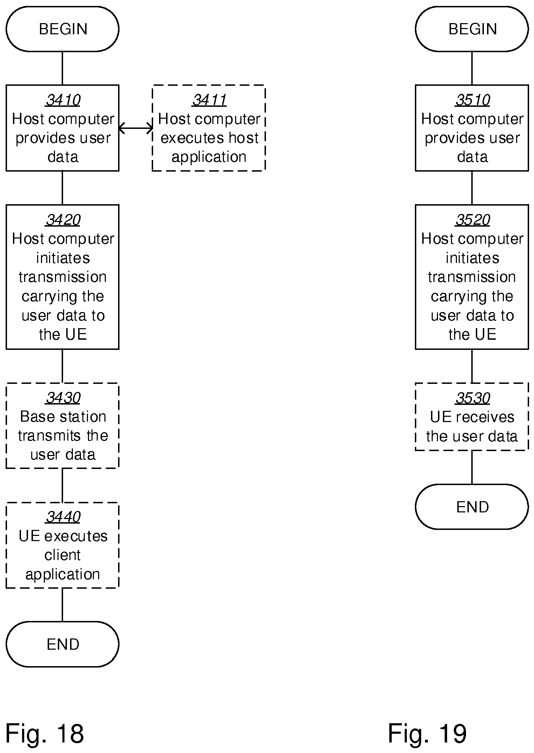

Figures 16 and 17 and the corresponding text are about a downstream aspect of the radio-related invention, while figures 18 and 19 and the corresponding text discuss an upstream aspect.

**Figure 18** is a flowchart illustrating a method implemented in a communication system, in accordance with one embodiment. The communication system includes a host computer, a base station such as a AP STA, and a UE such as a Non-AP STA which may be those described with reference to Figures 16 and 17. For simplicity of the present disclosure, only drawing references to Figure 16 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

**Figure 19** is a flowchart illustrating a method implemented in a communication system, in accordance with one embodiment. The communication system includes a host computer, a base station such as a AP STA, and a UE such as a Non-AP STA which may be those described with reference to Figures 16 and 17. For simplicity of the present disclosure, only drawing references to Figure 19 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

**Figure 20** is a flowchart illustrating a method implemented in a communication system, in accordance with one embodiment. The communication system includes a host computer, a base station such as a AP STA, and a UE such as a Non-AP STA which may be those described with reference to Figures 6 and 17. For simplicity of the present disclosure, only drawing references to Figure 20 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

**Figure 21** is a flowchart illustrating a method implemented in a communication system, in accordance with one embodiment. The communication system includes a host computer, a base station such as a AP STA, and a UE such as a Non-AP STA which may be those described with reference to Figures 16 and 17. For simplicity of the present disclosure, only drawing references to Figure 21 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

When using the word "comprise" or "comprising" it shall be interpreted as non-limiting, i.e. meaning "consist at least of.

The embodiments herein are not limited to the above described preferred embodiments. Various alternatives, modifications and equivalents may be used within the scope of the appended claims.

| Abbreviation | Explanation |
|---|---|
| 3GPP | 3^{rd} Generation Partnership Project |
| IAB | Integrated Access Backhaul |
| CN | Core Network |
| CU | Central Unit |
| DU | Distributed Unit |
| CP | Control Plane |
| UP | User Plane |
| UE | User Equipment |
| PDCP | Packet Data Convergence Protocol |
| RLC | Radio Link Control |
| MAC | Medium Access Control |
| SDU | Service Data Unit |
| PDU | Protocol Data Unit |
| SR | Scheduling Request |
| BSR | Buffer Status Report |
| UL | Uplink |
| DL | Downlink |
| ACK | Acknowledgement |
| NACK | Negative ACK |
| RRC | Radio Resource Control |
| SIB | System Information Block |

## Claims

1. A method performed by a Central Unit, CU, (134) for assist in routing a data packet towards a UE (120), wherein the CU (134) and the UE (120) are operating in an Integrated Access Backhaul, IAB, communications network (100), and wherein the method comprises:
- based on topology information for the IAB communications network (100), *determining* (801) all possible routes, between one or more IAB nodes (110) and/or one or more Distributed Units, DUs, (132) operating in the IAB communications network (100); and
- *transmitting* (802), to the one or more IAB nodes (110) and/or the one or more DUs (132), route information of the determined all possible routes, wherein each respective route information comprises a route identity and a respective node identity of the one or more IAB nodes (110) and/or DUs (132) comprised in the respective route, the route identity comprising information about the number of hops along the respective route.

2. The method according to claim 1, further comprising:
- *receiving* (803) information about one or more IAB nodes (110) and/or DUs (132) to be added to or deleted from the IAB communications network (100);.
- *updating* (804) one or more routes between one or more IAB nodes (110) and/or one or more DUs (132) in dependence of the received information; and
- *transmitting* (805) updated route information to one or more IAB nodes (110) and/or one or more DUs (132).

3. The method according to claim 1 or 2, further comprising:
- *storing* (806) the route information.

4. A computer program comprising instructions, which when executed by a processor, causes the processor to perform actions according to any of the claims 1-3.

5. A carrier comprising the computer program of claim 4, wherein the carrier is one of an electronic signal, an optical signal, an electromagnetic signal, a magnetic signal, an electric signal, a radio signal, a microwave signal, or a computer-readable storage medium.

6. A method performed by a first network node (110,132) for assist in routing a data packet towards a User Equipment, UE, (120), wherein the network node (110,132) and the UE (120) are operating in an Integrated Access Backhaul, IAB, communications network (100), and wherein the method comprises:
- *receiving* (1001), a data packet intended for the UE (120); and
- *determining* (1002) a second network node (110,132) to which the data packet is to be forwarded based on a node identity of the first network node (110,132) and based on route information received from a Central Unit, CU, (134) operating in the IAB communications network (100), wherein the route information comprises information of all possible routes in the IAB communications network (100), wherein each respective route information comprises a route identity and a respective node identity of one or more IAB nodes (110) and/or one or more DUs (132) comprised in the respective route, allowing priority handling of packets over the possible routes by sending higher priority packets on a shorter route and lower priority packets on a longer route, the route length being based on the hop count of the number of hops along the respective route comprised in the route identity; and
- *forwarding* (1003) the data packet to the second network node (110, 132) according to the priority handling.

7. The method according to claim 6, wherein the *determining (1002)* of the second network node (110,132) further comprises one or more out of:
- determining the second network node (110,132) for the data packet based on a Quality of Service, QoS, requirement associated with the data packet;
- determining the second network node (110,132) for the data packet based on a traffic load in one or more routes to the UE (120);
- determining the second network node (110,132) for the data packet based on a radio link failure in one or more routes to the UE (120);
- determining the second network node (110,132) for the data packet based on a number of intermediate nodes (110,132) to traverse in one or more routes to the UE (120); and
- determining the second network node (110,132) for the data packet based on a comparison between a remaining timestamp for the data packet and the number of intermediate nodes (110,132) to traverse in one or more routes to the UE (120) and selecting the second network node (110,132) as the node in the route providing delivery of the data packet within a required delay budget and/or within a specified time period.

8. The method according to any of the claims 6-7, wherein the *determining (1002)* of the second network node (110,132), to which the data packet is to be forwarded further is based on information in a header of the data packet.

9. A computer program comprising instructions, which when executed by a processor, causes the processor to perform actions according to any of the claims 6-8.

10. A carrier comprising the computer program of claim 9, wherein the carrier is one of an electronic signal, an optical signal, an electromagnetic signal, a magnetic signal, an electric signal, a radio signal, a microwave signal, or a computer-readable storage medium.

11. A Central Unit, CU, (134) for assisting in routing a data packet towards a UE (120), wherein the CU (134) and the UE (120) are operating in an Integrated Access Backhaul, IAB, communications network (100), and wherein the CU (134) is configured to:
- based on topology information for the IAB communications network (100), *determine* routes, between one or more IAB nodes (110) and/or one or more Distributed Units, DUs, (132) operating in the IAB communications network (100); and
- *transmit* to the one or more IAB nodes (110) and/or the one or more DUs (132), route information of the determined routes, wherein each respective route information comprises a route identity and a respective node identity of the one or more IAB nodes (110) and/or DUs (132) comprised in the respective route, the route identity comprising information about the number of hops along the respective route.

12. The CU (134) according to claim 11, further being configured to:
- *receive* information about one or more IAB nodes (110) and/or DUs (132) to be added to or deleted from the IAB communications network (100);.
- *update* one or more routes between one or more IAB nodes (110) and/or one or more DUs (132) in dependence of the received information; and
- *transmit* updated route information to one or more IAB nodes (110) and/or one or more DUs (132).

13. The CU (134) according to claim 11 or 12, further being configured to:
- *store* the route information.

14. A first network node (110,132) for assisting in routing a data packet towards a User Equipment, UE, (120), wherein the network node (110,132) and the UE (120) are operating in an Integrated Access Backhaul, IAB, communications network (100), and wherein the first network node (110,132) is configured to:
- *receive* a data packet intended for the UE (120); and
- *determine* a second network node (110,132) to which the data packet is to be forwarded based on a node identity of the first network node (110,132) and based on route information received from a Central Unit, CU, (134) operating in the IAB communications network (100), wherein the route information comprises information of all possible routes in the IAB communications network (100), wherein each respective route information comprises a route identity and a respective node identity of one or more IAB nodes (110) and/or one or more DUs (132) comprised in the respective route, to allow priority handling of packets over the possible routes by sending higher priority packets on a shorter route and lower priority packets on a longer route, the route length being based on the hop count of the number of hops along the respective route comprised in the route identity; and
- *forward* the data packet to the second network node (110, 132) according to the priority handling.

15. The first network node (110,132) according to claim 14, further being configured to *determine* the second network node (110,132) by one or more out of:
- determine the second network node (110,132) for the data packet based on a Quality of Service, QoS, requirement associated with the data packet;
- determine the second network node (110,132) for the data packet based on a traffic load in one or more routes to the UE (120);
- determine the second network node (110,132) for the data packet based on a radio link failure in one or more routes to the UE (120);
- determine the second network node (110,132) for the data packet based on a number of intermediate nodes (110,132) to traverse in one or more routes to the UE (120); and
- determine the second network node (110,132) for the data packet based on a comparison between a remaining timestamp for the data packet and the number of intermediate nodes (110,132) to traverse in one or more routes to the UE (120) and select the second network node (110,132) as the node in the route providing delivery of the data packet within a required delay budget and/or within a specified time period.

16. The first network node (110,132) according to any of the claims 14-15, further being configured to *determine* the second network node (110, 132), to which the data packet is to be forwarded, further based on information in a header of the data packet.

17. The first network node (110,132) according to any of the claims 14-16, wherein the first network node (110,132), is represented by any one out of: an IAB-node (110) or a DU (132).

## Patentansprüche

1. Verfahren, das von einer zentralen Einheit, CU, (134) durchgeführt wird, zur Unterstützung beim Routen eines Datenpakets zu einer UE (120), wobei die CU (134) und die UE (120) in einem Integrated-Access-Backhaul-, IAB- ,Kommunikationsnetzwerk (100) operieren, und wobei das Verfahren umfasst:
- Bestimmen (801) aller möglichen Routen zwischen einem oder mehreren IAB-Knoten (110) und/oder einer oder mehreren verteilten Einheiten, DUs, (132), die im IAB-Kommunikationsnetzwerk (100) operieren, basierend auf Topologieinformationen für das IAB-Kommunikationsnetzwerk (100); und
- Senden (802) von Routeninformationen aller der bestimmten möglichen Routen an den einen oder die mehreren IAB-Knoten (110) und/oder die eine oder die mehreren DUs (132), wobei jede jeweilige Routeninformation eine Routenidentität und eine jeweilige Knotenidentität des einen oder der mehreren IAB-Knoten (110) und/oder der einen oder der mehreren DUs (132) umfasst, die in der jeweiligen Route umfasst sind, wobei die Routenidentität Informationen über die Anzahl von Hops entlang der jeweiligen Route umfasst.

2. Verfahren nach Anspruch 1, ferner umfassend:
- Empfangen (803) von Informationen über einen oder mehrere IAB-Knoten (110) und/oder eine oder mehrere DUs (132), die zum IAB-Kommunikationsnetzwerk (100) hinzugefügt oder daraus entfernt werden sollen;
- Aktualisieren (804) einer oder mehrerer Routen zwischen einem oder mehreren IAB-Knoten (110) und/oder einer oder mehreren DUs (132) in Abhängigkeit von den empfangenen Informationen; und
- Senden (805) von aktualisierten Routeninformationen an einen oder mehrere IAB-Knoten (110) und/oder eine oder mehrere DUs (132) .

3. Verfahren nach Anspruch 1 oder 2, ferner umfassend:
- Speichern (806) der Routeninformationen.

4. Computerprogramm, umfassend Anweisungen, die bei Ausführung durch einen Prozessor den Prozessor zum Durchführen von Vorgängen nach einem der Ansprüche 1 bis 3 veranlassen.

5. Datenträger, umfassend das Computerprogramm nach Anspruch 4, wobei der Datenträger eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

6. Verfahren, das von einem ersten Netzwerkknoten (110, 132) durchgeführt wird, zur Unterstützung beim Routen eines Datenpakets zu einer Benutzereinrichtung, UE, (120), wobei der Netzwerkknoten (110, 132) und die UE (120) in einem Integrated-Access-Backhaul-,IAB- ,Kommunikationsnetzwerk (100) operieren, und wobei das Verfahren umfasst:
- Empfangen (1001) eines Datenpakets, das für die UE (120) bestimmt ist; und
- Bestimmen (1002) eines zweiten Netzwerkknotens (110, 132), an welchen das Datenpaket weitergeleitet werden soll, basierend auf einer Knotenidentität des ersten Netzwerkknotens (110, 132) und basierend von Routeninformationen, die von einer zentralen Einheit, CU, (134) empfangen werden, die im IAB-Kommunikationsnetzwerk (100) operiert, wobei die Routeninformationen Informationen aller möglichen Routen im IAB-Kommunikationsnetzwerk (100) umfassen, wobei jede jeweilige Routeninformationen eine Routenidentität und eine jeweilige Knotenidentität eines oder mehrerer IAB-Knoten (110) und/oder einer oder mehrerer DUs (132) umfasst, die in der jeweiligen Rute umfasst sind, um Prioritätsbehandlung von Paketen über die möglichen Routen zu ermöglichen, indem Pakete höherer Priorität auf einer kürzeren Route und Pakete niedrigerer Priorität auf einer längeren Route gesendet werden, wobei die Routenlänge auf der Hop-Zahl der Anzahl von Hops entlang der jeweiligen Route basiert, die in der Routenidentität umfasst ist; und
- Weiterleiten (1003) des Datenpakets an den zweiten Netzwerkknoten (110, 132) gemäß der Prioritätsbehandlung.

7. Verfahren nach Anspruch 6, wobei das Bestimmen (1002) des zweiten Netzwerkknotens (110, 132) ferner eines oder mehreres umfasst von:
- Bestimmen des zweiten Netzwerkknotens (110, 132) für das Datenpaket basierend auf einer Dienstqualitäts-,QoS-,Anforderung, die mit dem Datenpaket assoziiert ist;
- Bestimmen des zweiten Netzwerkknotens (110, 132) für das Datenpaket basierend auf einer Verkehrslast auf einer oder mehreren Routen zur UE (120);
- Bestimmen des zweiten Netzwerkknotens (110, 132) für das Datenpaket basierend auf einem Funkverbindungsausfall auf einer oder mehreren Routen zur UE (120);
- Bestimmen des zweiten Netzwerkknotens (110, 132) für das Datenpaket basierend auf einer Anzahl von zu durchlaufenden Zwischenknoten (110, 132) auf einer oder mehreren Routen zur UE (120); und
- Bestimmen des zweiten Netzwerkknotens (110, 132) für das Datenpaket basierend auf einem Vergleich zwischen einem Restzeitstempel für das Datenpaket und der Anzahl von zu durchlaufenden Zwischenknoten (110, 132) auf einer oder mehreren Routen zur UE (120) und Auswählen des zweiten Netzwerkknotens (110, 132) als den Knoten auf der Route, der Zustellung des Datenpakets innerhalb einer erforderlichen Verzögerungsbilanz und/oder innerhalb einer spezifizierten Zeitdauer bereitstellt.

8. Verfahren nach einem der Ansprüche 6 bis 7, wobei das Bestimmen (1002) des zweiten Netzwerkknotens (110, 132), an welchen das Datenpaket weitergeleitet werden soll, ferner auf Informationen in einem Header des Datenpakets basiert.

9. Computerprogramm, umfassend Anweisungen, die bei Ausführung durch einen Prozessor den Prozessor zum Durchführen von Vorgängen nach einem der Ansprüche 6 bis 8 veranlassen.

10. Datenträger, umfassend das Computerprogramm nach Anspruch 9, wobei der Datenträger eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

11. Zentrale Einheit, CU, (134) zum Unterstützen beim Routen eines Datenpakets zu einer UE (120), wobei die CU (134) und die UE (120) in einem Integrated-Access-Backhaul-,IAB-,Kommunikationsnetzwerk (100) operieren, und wobei die CU (134) konfiguriert ist zum:
- Bestimmen von Routen zwischen einem oder mehreren IAB-Knoten (110) und/oder einer oder mehreren verteilten Einheiten, DUs, (132), die im IAB-Kommunikationsnetzwerk (100) operieren, basierend auf Topologieinformationen für das IAB-Kommunikationsnetzwerk (100); und
- Senden von Routeninformationen der bestimmten Routen an den einen oder die mehreren IAB-Knoten (110) und/oder die eine oder die mehreren DUs (132), wobei jede jeweilige Routeninformation eine Routenidentität und eine jeweilige Knotenidentität des einen oder der mehreren IAB-Knoten (110) und/oder der einen oder der mehreren DUs (132) umfasst, die in der jeweiligen Route umfasst sind, wobei die Routenidentität Informationen über die Anzahl von Hops entlang der jeweiligen Route umfasst.

12. CU (134) nach Anspruch 11, die ferner konfiguriert ist zum:
- Empfangen von Informationen über einen oder mehrere IAB-Knoten (110) und/oder eine oder mehrere DUs (132), die zum IAB-Kommunikationsnetzwerk (100) hinzugefügt oder daraus entfernt werden sollen;
- Aktualisieren einer oder mehrerer Routen zwischen einem oder mehreren IAB-Knoten (110) und/oder einer oder mehreren DUs (132) in Abhängigkeit von den empfangenen Informationen; und
- Senden von aktualisierten Routeninformationen an einen oder mehrere IAB-Knoten (110) und/oder eine oder mehrere DUs (132).

13. CU (134) nach Anspruch 11 oder 12, die ferner konfiguriert ist zum:
- Speichern der Routeninformationen.

14. Erster Netzwerkknoten (110, 132) zum Unterstützen beim Routen eines Datenpakets zu einer Benutzereinrichtung, UE, (120), wobei der Netzwerkknoten (110, 132) und die UE (120) in einem Integrated-Access-Backhaul-,IAB- ,Kommunikationsnetzwerk (100) operieren, und wobei der erste Netzwerkknoten (110, 132) konfiguriert ist zum:
- Empfangen eines Datenpakets, das für die UE (120) bestimmt ist; und
- Bestimmen (1002) eines zweiten Netzwerkknotens (110, 132), an welchen das Datenpaket weitergeleitet werden soll, basierend auf einer Knotenidentität des ersten Netzwerkknotens (110, 132) und basierend auf Routeninformationen, die von einer zentralen Einheit, CU, (134) empfangen werden, die im IAB-Kommunikationsnetzwerk (100) operiert, wobei die Routeninformationen Informationen aller möglichen Routen im IAB-Kommunikationsnetzwerk (100) umfassen, wobei jede jeweilige Routeninformationen eine Routenidentität und eine jeweilige Knotenidentität eines oder mehrerer IAB-Knoten (110) und/oder einer oder mehrerer DUs (132) umfasst, die in der jeweiligen Rute umfasst sind, um Prioritätsbehandlung von Paketen über die möglichen Routen zu ermöglichen, indem Pakete höherer Priorität auf einer kürzeren Route und Pakete niedrigerer Priorität auf einer längeren Route gesendet werden, wobei die Routenlänge auf der Hop-Zahl der Anzahl von Hops entlang der jeweiligen Route basiert, die in der Routenidentität umfasst ist; und
- Weiterleiten des Datenpakets an den zweiten Netzwerkknoten (110, 132) gemäß der Prioritätsbehandlung.

15. Erster Netzwerkknoten (110, 132) nach Anspruch 14, der ferner so konfiguriert ist, dass er den zweiten Netzwerkknoten (110, 132) durch eines oder mehreres von Folgendem bestimmt:
- Bestimmen des zweiten Netzwerkknotens (110, 132) für das Datenpaket basierend auf einer Dienstqualitäts-,QoS-,Anforderung, die mit dem Datenpaket assoziiert ist;
- Bestimmen des zweiten Netzwerkknotens (110, 132) für das Datenpaket basierend auf einer Verkehrslast auf einer oder mehreren Routen zur UE (120);
- Bestimmen des zweiten Netzwerkknotens (110, 132) für das Datenpaket basierend auf einem Funkverbindungsausfall auf einer oder mehreren Routen zur UE (120);
- Bestimmen des zweiten Netzwerkknotens (110, 132) für das Datenpaket basierend auf einer Anzahl von zu durchlaufenden Zwischenknoten (110, 132) auf einer oder mehreren Routen zur UE (120); und
- Bestimmen des zweiten Netzwerkknotens (110, 132) für das Datenpaket basierend auf einem Vergleich zwischen einem Restzeitstempel für das Datenpaket und der Anzahl von zu durchlaufenden Zwischenknoten (110, 132) auf einer oder mehreren Routen zur UE (120) und Auswählen des zweiten Netzwerkknotens (110, 132) als den Knoten auf der Route, der Zustellung des Datenpakets innerhalb einer erforderlichen Verzögerungsbilanz und/oder innerhalb einer spezifizierten Zeitdauer bereitstellt.

16. Erster Netzwerkknoten (110, 132) nach einem der Ansprüche 14 bis 15, der ferner so konfiguriert ist, dass er den zweiten Netzwerkknoten (110, 132), an welchen das Datenpaket weitergeleitet werden soll, ferner basierend auf Informationen in einem Header des Datenpakets bestimmt.

17. Netzwerkknoten (110, 132) nach einem der Ansprüche 14 bis 16, wobei der erste Netzwerkknoten (110, 132) durch eines dargestellt wird von: einem IAB-Knoten (110) oder einer DU (132).

## Revendications

1. Procédé réalisé par une unité centrale, CU, (134) pour aider à l'acheminement d'un paquet de données vers un UE (120), dans lequel la CU (134) et l'UE (120) fonctionnent dans un réseau de communication de liaison terrestre à accès intégré, IAB, (100), et dans lequel le procédé comprend :
- sur la base d'informations de topologie pour le réseau de communication IAB (100), la détermination (801) de tous les itinéraires possibles, entre un ou plusieurs nœuds IAB (110) et/ou une ou plusieurs unités distribuées, DU, (132) fonctionnant dans le réseau de communication IAB (100) ; et
- la transmission (802), aux un ou plusieurs nœuds IAB (110) et/ou aux une ou plusieurs DU (132), d'informations d'itinéraires de tous les itinéraires possibles déterminés, dans lequel les informations de chaque itinéraire respectif comprennent une identité d'itinéraire et une identité de nœud respectif des un ou plusieurs nœuds IAB (110) et/ou des une ou plusieurs DU (132) compris dans l'itinéraire respectif, l'identité d'itinéraire comprenant des informations relatives au nombre de sauts le long de l'itinéraire respectif.

2. Procédé selon la revendication 1, comprenant en outre :
- la réception (803) d'informations relatives aux un ou plusieurs nœuds IAB (110) et/ou aux une ou plusieurs DU (132) à ajouter au ou supprimer du réseau de communication IAB (100) ;
- la mise à jour (804) d'un ou plusieurs itinéraires entre un ou plusieurs nœuds IAB (110) et/ou une ou plusieurs DU (132) en fonction des informations reçues ; et
- la transmission (805) d'informations d'itinéraire mises à jour aux un ou plusieurs nœuds IAB (110) et/ou aux une ou plusieurs DU (132).

3. Procédé selon la revendication 1 ou 2, comprenant en outre :
- le stockage (806) des informations d'itinéraire.

4. Programme d'ordinateur comprenant des instructions qui, lorsqu'elles sont exécutées par un processeur, amènent le processeur à réaliser des actions selon l'une quelconque des revendications 1 à 3.

5. Porteur comprenant le programme d'ordinateur selon la revendication 4, dans lequel le porteur est l'un parmi un signal électronique, un signal optique, un signal électromagnétique, un signal magnétique, un signal électrique, un signal radio, un signal micro-ondes ou un support de stockage lisible par ordinateur.

6. Procédé réalisé par un premier nœud de réseau (110, 132) pour aider à l'acheminement d'un paquet de données vers un équipement utilisateur, UE, (120), dans lequel le nœud de réseau (110, 132) et l'UE (120) fonctionnent dans un réseau de communication de liaison terrestre à accès intégré, IAB, (100), et dans lequel le procédé comprend :
- la réception (1001) d'un paquet de données destiné à l'UE (120) ; et
- la détermination (1002) d'un deuxième nœud de réseau (110, 132) auquel le paquet de données doit être transféré sur la base d'une identité de nœud du premier nœud de réseau (110, 132) et sur la base d'informations d'itinéraire reçues depuis une unité centrale, CU, (134) fonctionnant dans le réseau de communication IAB (100), dans lequel les informations d'itinéraire comprennent des informations de tous les itinéraires possibles dans le réseau de communication IAB (100), dans lequel les informations de chaque itinéraire respectif comprennent une identité d'itinéraire et une identité de nœud respectif des un ou plusieurs nœuds IAB (110) et/ou des une ou plusieurs DU (132) compris dans l'itinéraire respectif, en permettant une gestion de priorités de paquets sur les itinéraires possibles par l'envoi de paquets de priorités supérieures sur un itinéraire plus court et de paquets de priorités inférieures sur un itinéraire plus long, la longueur d'itinéraire étant basée sur le compte de sauts du nombre de sauts le long de l'itinéraire respectif compris dans l'identité d'itinéraire ; et
- le transfert (1003) du paquet de données au deuxième nœud de réseau (110, 132) en fonction de la gestion de priorités.

7. Procédé selon la revendication 6, dans lequel la détermination (1002) du deuxième nœud de réseau (110, 132) comprend en outre une ou plusieurs parmi :
- la détermination du deuxième nœud de réseau (110, 132) pour le paquet de données sur la base d'une exigence de qualité de service, QoS, associée au paquet de données ;
- la détermination du deuxième nœud de réseau (110, 132) pour le paquet de données sur la base d'une charge de trafic dans un ou plusieurs itinéraires vers l'UE (120) ;
- la détermination du deuxième nœud de réseau (110, 132) pour le paquet de données sur la base d'une défaillance de liaison radio dans un ou plusieurs itinéraires vers l'UE (120) ;
- la détermination du deuxième nœud de réseau (110, 132) pour le paquet de données sur la base d'un nombre de nœuds intermédiaires (110, 132) à traverser dans un ou plusieurs itinéraires vers l'UE (120) ; et
- la détermination du deuxième nœud de réseau (110, 132) pour le paquet de données sur la base d'une comparaison entre un horodatage restant pour le paquet de données et le nombre de nœuds intermédiaires (110, 132) à traverser dans un ou plusieurs itinéraires vers l'UE (120) et la sélection du deuxième nœud de réseau (110, 132) en tant que le nœud dans l'itinéraire fournissant la distribution du paquet de données dans un budget de retard requis et/ou dans une période de temps spécifiée.

8. Procédé selon l'une quelconque des revendications 6 et 7, dans lequel la détermination (1002) du deuxième nœud de réseau (110, 132), auquel le paquet de données doit être transféré, est en outre basée sur des informations dans un en-tête du paquet de données.

9. Programme d'ordinateur comprenant des instructions qui, lorsqu'elles sont exécutées par un processeur, amènent le processeur à réaliser des actions selon l'une quelconque des revendications 6 à 8.

10. Porteur comprenant le programme d'ordinateur selon la revendication 9, dans lequel le porteur est l'un parmi un signal électronique, un signal optique, un signal électromagnétique, un signal magnétique, un signal électrique, un signal radio, un signal micro-ondes ou un support de stockage lisible par ordinateur.

11. Unité centrale, CU, (134) pour aider à l'acheminement d'un paquet de données vers un UE (120), dans laquelle la CU (134) et l'UE (120) fonctionnent dans un réseau de communication de liaison terrestre à accès intégré, IAB, (100), et dans laquelle la CU (34) est configurée pour :
- sur la base d'informations de topologie pour le réseau de communication IAB (100), déterminer des itinéraires, entre un ou plusieurs nœuds IAB (110) et/ou une ou plusieurs unités distribuées, DU, (132) fonctionnant dans le réseau de communication IAB (100) ; et
- transmettre, aux un ou plusieurs nœuds IAB (110) et/ou aux une ou plusieurs DU (132), des informations d'itinéraires des itinéraires déterminés, dans laquelle les informations de chaque itinéraire respectif comprennent une identité d'itinéraire et une identité de nœud respectif des un ou plusieurs nœuds IAB (110) et/ou des une ou plusieurs DU (132) compris dans l'itinéraire respectif, l'identité d'itinéraire comprenant des informations relatives au nombre de sauts le long de l'itinéraire respectif.

12. CU (134) selon la revendication 11, étant en outre configurée pour :
- recevoir des informations relatives aux un ou plusieurs nœuds IAB (110) et/ou aux une ou plusieurs DU (132) à ajouter au ou supprimer du réseau de communication IAB (100) ;
- mettre à jour un ou plusieurs itinéraires entre un ou plusieurs nœuds IAB (110) et/ou une ou plusieurs DU (132) en fonction des informations reçues ; et
- transmettre des informations d'itinéraire mises à jour aux un ou plusieurs nœuds IAB (110) et/ou aux une ou plusieurs DU (132).

13. CU (134) selon la revendication 11 ou 12, étant en outre configurée pour :
- stocker les informations d'itinéraire.

14. Premier nœud de réseau (110, 132) pour aider à l'acheminement d'un paquet de données vers un équipement utilisateur, UE, (120), dans lequel le nœud de réseau (110, 132) et l'UE (120) fonctionnent dans un réseau de communication de liaison terrestre à accès intégré, IAB, (100), et dans lequel le premier nœud de réseau (110, 132) est configuré pour :
- recevoir un paquet de données destiné à l'UE (120) ; et
- déterminer (1002) un deuxième nœud de réseau (110, 132) auquel le paquet de données doit être transféré sur la base d'une identité de nœud du premier nœud de réseau (110, 132) et sur la base d'informations d'itinéraire reçues depuis une unité centrale, CU, (134) fonctionnant dans le réseau de communication IAB (100), dans lequel les informations d'itinéraire comprennent des informations de tous les itinéraires possibles dans le réseau de communication IAB (100), dans lequel les informations de chaque itinéraire respectif comprennent une identité d'itinéraire et une identité de nœud respectif des un ou plusieurs nœuds IAB (110) et/ou des une ou plusieurs DU (132) compris dans l'itinéraire respectif, pour permettre une gestion de priorités de paquets sur les itinéraires possibles par l'envoi de paquets de priorités supérieures sur un itinéraire plus court et de paquets de priorités inférieures sur un itinéraire plus long, la longueur d'itinéraire étant basée sur le compte de sauts du nombre de sauts le long de l'itinéraire respectif compris dans l'identité d'itinéraire ; et
- transférer le paquet de données au deuxième nœud de réseau (110, 132) en fonction de la gestion de priorités.

15. Premier nœud de réseau (110, 132) selon la revendication 14, étant en outre configuré pour déterminer le deuxième nœud de réseau (110, 132) par une ou plusieurs parmi :
- la détermination du deuxième nœud de réseau (110, 132) pour le paquet de données sur la base d'une exigence de qualité de service, QoS, associée au paquet de données ;
- la détermination du deuxième nœud de réseau (110, 132) pour le paquet de données sur la base d'une charge de trafic dans un ou plusieurs itinéraires vers l'UE (120) ;
- la détermination du deuxième nœud de réseau (110, 132) pour le paquet de données sur la base d'une défaillance de liaison radio dans un ou plusieurs itinéraires vers l'UE (120) ;
- la détermination du deuxième nœud de réseau (110, 132) pour le paquet de données sur la base d'un nombre de nœuds intermédiaires (110, 132) à traverser dans un ou plusieurs itinéraires vers l'UE (120) ; et
- la détermination du deuxième nœud de réseau (110, 132) pour le paquet de données sur la base d'une comparaison entre un horodatage restant pour le paquet de données et le nombre de nœuds intermédiaires (110, 132) à traverser dans un ou plusieurs itinéraires vers l'UE (120) et la sélection du deuxième nœud de réseau (110, 132) en tant que le nœud dans l'itinéraire fournissant la distribution du paquet de données dans un budget de retard requis et/ou dans une période de temps spécifiée.

16. Premier nœud de réseau (110, 132) selon l'une quelconque des revendications 14 et 15, étant en outre configuré pour déterminer le deuxième nœud de réseau (110, 132), auquel le paquet de données doit être transféré, en outre sur la base d'informations dans un en-tête du paquet de données.

17. Premier nœud de réseau (110, 132) selon l'une quelconque des revendications 14 à 16, dans lequel le premier nœud de réseau (110, 132) est représenté par l'un quelconque parmi : un nœud IAB (110) et une DU (132).
